(19)

**Europäisches Patentamt**
**European Patent Office**
**Office européen des brevets**

(11)     **EP 4 329 287 B1**

(12)     **EUROPEAN PATENT SPECIFICATION**

(45) Date of publication and mention
of the grant of the patent:
**31.12.2025   Bulletin 2026/01**

(21) Application number: **22814827.6**

(22) Date of filing: **28.03.2022**

(51) International Patent Classification (IPC):
*H04N 23/45* (2023.01)         *H04N 23/62* (2023.01)
*H04N 23/63* (2023.01)         *H04N 23/65* (2023.01)
*H04N 23/69* (2023.01)         *H04N 23/698* (2023.01)
*H04N 23/90* (2023.01)         *H04N 5/262* (2006.01)
*H04M 1/72469* (2021.01)

(52) Cooperative Patent Classification (CPC):
H04M 1/72469; H04N 5/2628; H04N 23/45;
H04N 23/62; H04N 23/63; H04N 23/631;
H04N 23/632; H04N 23/633; H04N 23/651;
H04N 23/69; H04N 23/698; H04N 23/90;
H04M 2250/52; H04N 5/2621

(86) International application number:
**PCT/CN2022/083426**

(87) International publication number:
**WO 2022/252780 (08.12.2022 Gazette 2022/49)**

(54) **PHOTOGRAPHING METHOD AND ELECTRONIC DEVICE**

FOTOGRAFIEVERFAHREN UND ELEKTRONISCHE VORRICHTUNG

PROCÉDÉ DE PHOTOGRAPHIE ET DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2021   CN 202110612148**

(43) Date of publication of application:
**28.02.2024   Bulletin 2024/09**

(73) Proprietor: **Huawei Technologies Co., Ltd.
Shenzhen, Guangdong 518129 (CN)**

(72) Inventor: **CHEN, Wei
Shenzhen, Guangdong 518129 (CN)**

(74) Representative: **Thun, Clemens
Mitscherlich PartmbB
Patent- und Rechtsanwälte
Karlstraße 7
80333 München (DE)**

(56) References cited:
EP-A1- 3 720 112          CN-A- 110 351 487
CN-A- 111 654 631          CN-A- 111 885 305
JP-A- 2005 080 086          US-A1- 2017 230 585
US-A1- 2020 137 372

## Description

This application claims priority to Chinese Patent Application No. 202110612148.0, filed with the China National Intellectual Property Administration on May 31, 2021 and entitled "PHOTOGRAPHING METHOD AND ELECTRONIC DEVICE'.

## TECHNICAL FIELD

This application relates to the field of terminal technologies, and in particular, to a photographing method and an electronic device.

## BACKGROUND

With development of electronic technologies, more cameras are configured for some electronic devices such as a mobile phone and a tablet computer, to implement zoom photographing in a larger ratio range (for example, a ratio of 0.5 to a ratio of 30), and therefore meet a plurality of photographing requirements of a user. However, currently, a problem of a field of view (Field of View, FOV) center jump occurs in a zoom process, and user experience is poor. In addition, in a scenario in which zoom photographing is not required, some electronic devices also enable all cameras, causing high power consumption of the electronic devices.

US 2020/137372 Al discloses a digital photographing device including a plurality of cameras on a common side of the device. When cameras are switched, images output on the display are switched. During the image transition, one or more virtual viewpoint images are output between a pre-transition image and a post-transition image, resulting in a smooth visual transition.

EP 3 720 112 Al discloses a zooming method and an electronic device using the same. The method comprising acquiring a first image by a first camera unit; acquiring a current frame image by scaling the first image according to a zoom instruction; acquiring a second image by a second camera unit; and switching the first camera unit to the second camera unit for outputting the second image. So that a problem of image jump when switching camera units can be solved.

US 2017/230585 Al discloses devices and methods for providing seamless preview images for multi-camera devices having two or more asymmetric cameras. The method comprises steps of retrieving an image generated by a first camera from the memory component, retrieving an image generated by a second camera from the memory component, receiving input corresponding to a preview zoom level, retrieving spatial transform information and photometric transform information from memory, modifying at least one image received from the first and second cameras by the spatial transform and the photometric transform.

CN 111 654 631 A discloses a zoom control method comprising when a first camera is switched to a second camera, calculating a current offset between a second center position of a second image acquired by the second camera and a first center position of the first image acquired by the first camera; adjusting, according to the current offset, a second center position of the second image acquired by the second camera, so that the second center position coincides with the first center position; and; cropping the second image by using the adjusted second central position as a center. Therefore, a sense of sudden change generated by different cameras in shooting images can be reduced.

## SUMMARY

Embodiments of this application provide a photographing method and an electronic device, to avoid an FOV center jump in a zoom photographing process, implement smooth FOV transition, and improve user experience. In addition, a corresponding camera on the electronic device may be enabled as required, so that power consumption of the electronic device is reduced.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, this disclosure provides a photographing method according to claim 1, applied to an electronic device comprising a display and a plurality of cameras with different focal lengths, wherein the plurality of cameras comprise a first camera and a second camera, and the method comprises: displaying, by the electronic device, a preview image at a first zoom ratio on the display, wherein the preview image at the first zoom ratio is captured by the first camera, and a Field of View, FOV, center of the preview image at the first zoom ratio coincides with an FOV center of the first camera; detecting, by the electronic device, a display tap operation of a user for a second zoom ratio option; starting to enable, by the electronic device, the second camera in response to the display tap operation; gradually changing, by the electronic device, an FOV of the preview image during a process of enabling the second camera to running status, wherein the FOV center of preview image during the process coincides with the FOV center of preview image at the first zoom ratio, and the preview image during the process is obtained by cropping image captured by the first camera; continuing gradually changing, by the electronic device, the FOV of the preview image after the second camera enters running status, and moving the FOV center of the preview image towards an FOV center of the second camera; disabling, by the electronic device, the first camera, and displaying the preview image at a second zoom ratio on the display, wherein the preview image at the second zoom ratio is captured by the second camera, and the FOV center of the preview image at the second zoom ratio coincides with the FOV center of the second camera.

According to the photographing method provided in this disclosure, the electronic device may execute an FOV center offset algorithm based on images captured by the two cameras, so that an FOV center of an image captured by a current camera gradually approaches an FOV center of an image captured by a target camera. This implements smooth FOV center transition, and avoids an FOV center jump.

In a possible implementation, the tap operation includes: an operation of first touching the second zoom ratio option and then leaving the second zoom ratio option by a finger of the user or a handwriting apparatus.

In this way, the tap operation described in this disclosure can be distinguished from an operation of only first touching the second zoom ratio option by the finger of the user or the handwriting apparatus.

In a possible implementation, that the electronic device generates at least one second preview image based on at least one third zoom ratio, and displays the at least one second preview image on the display specifically includes: When detecting an operation of touching the second zoom ratio option by the finger of the user or the handwriting apparatus, the electronic device starts to generate the at least one second preview image based on the at least one third zoom ratio and display the at least one second preview image on the display.

In this way, more internal processing time can be reserved for the electronic device, so that a user requirement can be responded more quickly after the user performs the operation.

In a possible implementation, a method for determining a quantity N of second preview images is as follows:

$$N=T/t,$$

where

T is a time interval between time at which the electronic device detects the tap operation of the user for the second zoom ratio option and time at which the electronic device displays the third preview image at the second zoom ratio on the display, and t is a time interval between two adjacent preview frames in a current camera system.

In this way, a quantity of image frames that need to be displayed on the display can be calculated.

In a possible implementation, a method for determining a zoom value zoom Value corresponding to the third zoom ratio is as follows:

$$\text{zoomValue}= 2^{\frac{S}{T}*t*n},$$

where

S is a distance between a first zoom ratio option and the second zoom ratio option on the display, and n is a positive integer less than the quantity N of second preview images.

In this way, the zoom value corresponding to the third zoom ratio can be calculated.

In a possible implementation, an FOV center of the first preview image is consistent with an FOV center of the first camera, and an FOV center of the third preview image is consistent with an FOV center of the second camera.

In this way, it can be ensured that an FOV center of an image captured by a camera coincides with an FOV center of a preview image.

In a possible implementation, before the electronic device detects the tap operation of the user for the second zoom ratio option, the method further includes: The electronic device powers on the second camera, and enables and runs the second camera.

In this way, when the electronic device runs a plurality of cameras at the same time, time for enabling a camera can be reduced in a scenario in which zoom is required.

In a possible implementation, an FOV center of the at least one second preview image gradually approaches the FOV center of the second camera.

In this way, smooth zoom can be implemented, and the FOV center jump can be avoided.

In a possible implementation, after the electronic device detects the tap operation of the user for the second zoom ratio option, the method further includes: The electronic device powers on the second camera, and enables and runs the second camera.

In this way, a camera can be enabled as required, so that power consumption of the electronic device can be reduced.

In a possible implementation, before the electronic device runs the second camera, an FOV center of the at least one second preview image is consistent with the FOV center of the first camera; and after the electronic device runs the second camera, the FOV center of the at least one second preview image starts to gradually approach the FOV center of the second camera.

In this way, when power consumption of the electronic device is reduced, smooth zoom can be further implemented, and the FOV center jump can be avoided.

According to a second aspect, this disclosure provides an electronic device according to claim 7. The electronic device includes a display, a plurality of cameras with different focal lengths, a memory, a processor coupled to the memory, a plurality of applications, and one or more programs. Optical centers of the plurality of cameras do not coincide with each other, the plurality of cameras include a first camera and a second camera, and the first camera and the second camera are two cameras with adjacent focal lengths in the plurality of cameras. When the processor runs the one or more programs, the electronic device is enabled to perform the method according to any possible implementation of any one of the foregoing aspects.

According to a third aspect, this disclosure provides a computer storage medium according to claim 8. The computer storage medium stores a computer program, and the computer program includes program instructions. When the program instructions are run on an electronic device comprising a display and a plurality of cameras with different focal lengths, the electronic device is enabled to perform the method according to any possible implementation of any one of the foregoing aspects.

According to a fourth aspect, this disclosure provides a computer program product not claimed. When the computer program product runs on a computer, the computer is enabled to perform the method according to any possible implementation of any one of the foregoing aspects.

## BRIEF DESCRIPTION OF DRAWINGS

FIG. 1 is a schematic diagram of a structure of an electronic device according to an embodiment of this application;
FIG. 2A and FIG. 2B are schematic diagrams of an outline structure of an electronic device according to an embodiment of this application;
FIG. 3A and FIG. 3B are schematic diagrams of user interfaces of a typical photographing scenario according to an embodiment of this application;
FIG. 4A to FIG. 4H are schematic diagrams of user interfaces for performing zoom in in a preview scenario according to an embodiment of this application:
FIG. 5A to FIG. 5H are schematic diagrams of user interfaces for performing zoom out in a preview scenario according to an embodiment of this application:
FIG. 6A to FIG. 6H are schematic diagrams of user interfaces for performing zoom in a video recording scenario according to an embodiment of this application:
FIG. 7 is a schematic flowchart of a method for implementing smooth FOV center transition in a tap-to-zoom scenario according to an embodiment of this application;
FIG. 8 is a schematic diagram of a specific execution process of an FOV center offset algorithm according to an embodiment of this application;
FIG. 9A to FIG. 9D are schematic diagrams of enabled/disabled states of a plurality of cameras according to an embodiment of this application;
FIG. 10 is a schematic diagram of collaboration between some software and hardware of an electronic device during zoom in according to an embodiment of this application;
FIG. 11 is a schematic diagram of collaboration between some software and hardware of an electronic device during zoom out according to an embodiment of this application; and
FIG. 12 is a schematic flowchart of a photographing method according to an embodiment of this application.

## DESCRIPTION OF EMBODIMENTS

The following clearly and completely describes technical solutions in embodiments of this application with reference to the accompanying drawings in embodiments of this application. In descriptions of embodiments of this application, unless otherwise specified, "/" means "or". For example, A/B may represent A or B. "And/or" in this specification describes only an association relationship between associated objects, and represents that three relationships may exist. For example, A and/or B may represent the following three cases: Only A exists, both A and B exist, and only B exists. In addition, in the descriptions of embodiments of this application, "a plurality of" means two or more than two.

It should be understood that terms "first", "second", and the like in the specification, the claims, and the accompanying drawings of this application are intended to distinguish between different objects, but are not intended to describe a specific order. In addition, terms "include" and "have" and any other variants thereof are intended to cover non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

An "embodiment" mentioned in this application means that a specific feature, structure, or characteristic described with reference to the embodiment may be included in at least one embodiment of this application. The phrase appearing in various locations in this specification does not necessarily mean a same embodiment, and neither means an independent or alternative embodiment mutually exclusive with another embodiment. It is explicitly and implicitly understood by persons skilled in the art that embodiments described in this application may be combined with another embodiment.

Embodiments of this application provide a photographing method, to avoid an FOV center jump in a zoom photographing process, implement smooth FOV transition, and improve user experience. In addition, a corresponding camera on an electronic device can be enabled as required, so that power consumption of the electronic device can be reduced.

The photographing method provided in embodiments of this application may be applied to an electronic device including a plurality of cameras having different focal lengths. The plurality of cameras may be a common camera, a long-focus camera, a wide-angle camera, and the like. Because locations of the plurality of cameras on the electronic device are different, optical centers of the plurality of cameras do not coincide with each other. Consequently, FOV centers of the plurality of cameras are inconsistent. It is assumed that an optical zoom ratio of the common camera is 1 (represented as 1X), an optical zoom ratio of the long-focus camera is 5 (represented as 5X, where subsequently X indicates a zoom ratio), and an optical zoom ratio of the wide-angle camera is 0.4X. Usually, because the optical centers of the plurality of cameras do not coincide with each other, an FOV center jump occurs in an optical zoom process related to camera switching. For example, in a process of switching from the common camera to the long-focus camera, a center point of photographing falls at clearly different locations, affecting focusing of a user. Currently, in a scenario in which zoom photographing is not required, some electronic devices also enable all cameras, causing high power consumption of the electronic devices.

According to the photographing method provided in embodiments of this application, a problem of the FOV center jump occurring in the optical zoom process can be resolved. In addition, only one default camera may be enabled in a scenario in which zoom is not required, and another corresponding camera on the electronic device may be enabled in a scenario in which zoom is required, so that power consumption of the electronic device is reduced. The electronic device may enable only one camera (for example, the common camera) with a large FOV by default. When detecting an operation of increasing a zoom ratio by the user, the electronic device may enable a camera (for example, the long-focus camera) with a small FOV. After the camera with the small FOV runs, the electronic device may use an FOV center offset algorithm to crop an image captured by the camera with the large FOV, so that an FOV center of an image obtained through cropping gradually approaches an FOV center of the camera with the small FOV This implements smooth FOV transition, and avoids the FOV center jump. Herein, the camera with the large FOV and the camera with the small FOV refer to two cameras involved in one time of camera switching, for example, switching from the common camera to the long-focus camera. That the FOV center offset algorithm is used to perform eccentric cropping on the image captured by the camera with the large FOV mainly means: In a zoom process, as the zoom ratio continuously approaches a zoom ratio range for the camera switching, the image captured by the camera with the large FOV is sequentially cropped for a plurality of times, so that FOV centers of images obtained through the plurality of times of cropping (for example, images obtained through cropping at 3.1X, 3.2X, 3.3X, ..., and 4.9X) gradually approach the FOV center of the camera with the small FOV, and even an FOV center of an image obtained through cropping at 4.9X may coincide with an FOV center of the long-focus camera. Therefore, the FOV center jump is avoided. The following content describes in detail an implementation of performing, based on the FOV center offset algorithm, eccentric cropping on the image captured by the camera with the large FOV Details are not described herein.

In this way, when the user increases the zoom ratio (for example, from 1X to 5X) to observe a distant scene in detail, the photographing method provided in embodiments of this application helps the user "lock" a target scene in the zoom process, to avoid a case in which the user "loses" the target scene due to the camera switching, and avoid repeated framing and focusing of the user. Therefore, efficiency and convenience of zoom photographing are improved. In addition, another corresponding camera on the electronic device is enabled in the scenario in which zoom is required, so that the power consumption of the electronic device is reduced.

Herein, increasing the zoom ratio is merely used as an example. The photographing method provided in embodiments of this application is also applicable to a use scenario in which the zoom ratio is reduced (for example, switching is performed from the common camera to the wide-angle camera).

The electronic device may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a dedicated camera (for example, a single-lens reflex camera or a card camera), or the like. A specific type of the electronic device is not limited in this application.

In embodiments of this application, when the zoom ratio is increased, a zoom ratio range for camera switching is 4.9X to 5X, and the camera switching is specifically the switching from the common camera to the long-focus camera. In other words, a zoom ratio switching point for switching from the common camera to the long-focus camera is 5X.

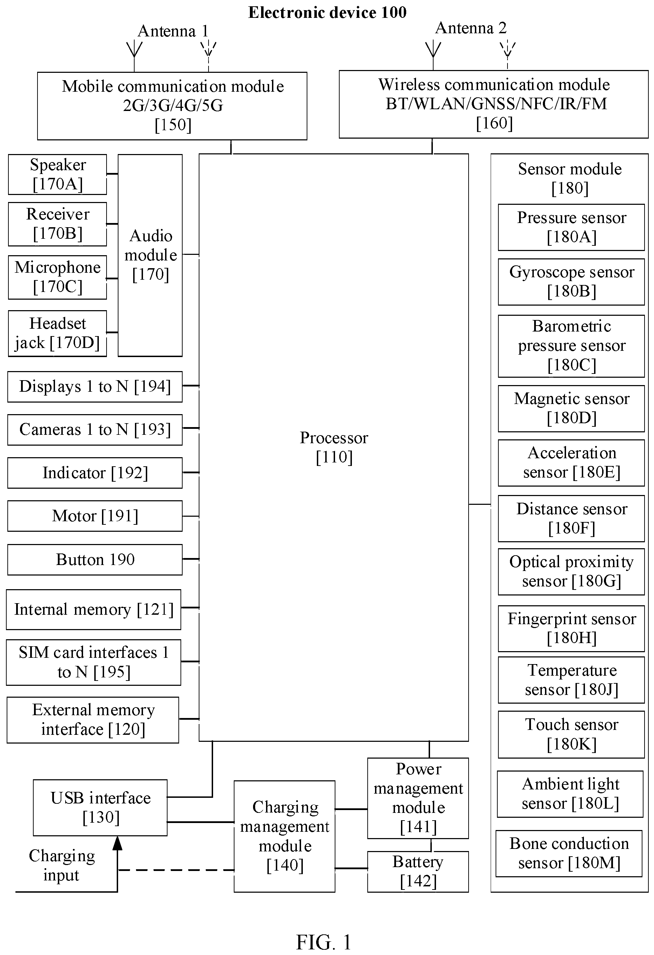

FIG. 1 shows an example of a structure of an electronic device 100 according to an embodiment of this application.

As shown in FIG. 1, the electronic device 100 may have a plurality of cameras 193, for example, a common camera, a wide-angle camera, an ultra-wide-angle camera, and a long-focus camera. A smaller focal length of the camera 193 indicates a larger field of view, a larger framing range, and more scenes that can be photographed by the camera 193. On the contrary, a larger focal length of the camera 193 indicates a smaller field of view, a smaller framing range, and fewer but farther scenes that can be photographed by the camera 193. For example, a focal length of the ultra-wide-angle camera is usually about 12 millimeters (millimeter, mm) to 24 mm, and a field of view of the ultra-wide-angle camera is usually 84° to 120°; a focal length of the wide-angle camera is usually about 24 mm to 35 mm, and a field of view of the wide-angle camera is usually 63° to 84°; a focal length of the common camera is usually about 50 mm, and a field of view of the common camera is usually about 46°; a focal length of the long-focus camera is usually 135 mm to 500 mm, and a field of view of the long-focus camera is usually 5° to 18°; a focal length of a ultra-long-focus camera is usually greater than 500 mm, and a field of view of the ultra-long-focus camera is usually 0° to 5°. In terms of fields of view, performance of the foregoing several cameras is as follows: The ultra-wide-angle camera is superior to the wide-angle camera, the wide-angle camera is superior to the common camera, the common camera is superior to the long-focus camera, and the long-focus camera is superior to the ultra-long-focus camera.

Because locations of the plurality of cameras on the electronic device are different, optical centers of the plurality of cameras do not coincide with each other. Consequently, FOV centers of the plurality of cameras are inconsistent. It is assumed that an optical zoom ratio of the common camera is 1X, an optical zoom ratio of the long-focus camera is 5X, and an optical zoom ratio of the wide-angle camera is 0.4X. Usually, because the optical centers of the plurality of cameras do not coincide with each other, an FOV center jump occurs in an optical zoom process related to camera switching. For example, in a process of switching from the common camera to the long-focus camera, a center point of photographing falls at clearly different locations, affecting focusing of a user.

In addition, the electronic device 100 may further include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

In some embodiments, the memory in the processor 110 is a cache. The memory may store instructions or data that has just been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in this embodiment, or use a combination of a plurality of interface connection manners.

The charging management module 140 is configured to receive a charging input from a charger. The power management module 141 is configured to connect to the battery 142, the charging management module 140, and the processor 110. In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. The mobile communication module 150 may provide a solution that is applied to the electronic device 100 and that is for wireless communication including 2G/3G/4G/5G or the like. The wireless communication module 160 may provide a solution that is applied to the electronic device 100 and that is for wireless communication including a wireless local area network (wireless local area network. WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. In some embodiments, the antenna 1 of the electronic device 100 is coupled to the mobile communication module 150, and the antenna 2 is coupled to the wireless communication module 160, so that the electronic device 100 may communicate with a network and another device by using a wireless communication technology.

The wireless communication technology mentioned above may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The external memory interface 120 may be configured to connect to an external memory card, for example, a micro SD card, to extend a storage capability of the electronic device 100. The internal memory 121 may be configured to store computer-executable program code. The executable program code includes instructions. The processor 110 runs the instructions stored in the internal memory 121, to perform various functional applications and data processing of the electronic device 100. The internal memory 121 may include a program storage area and a data storage area.

The electronic device 100 may implement an audio function, for example, music playing and recording, through the audio module 170, the speaker 170A, the receiver 170B, the microphone 170C, the headset jack 170D, the application processor, and the like. The audio module 170 is configured to convert digital audio information into an analog audio signal output, and is further configured to convert an analog audio input into a digital audio signal. The audio module 170 may be further configured to encode and decode audio signals. In some embodiments, the audio module 170 may be disposed in the processor 110, or some functional modules of the audio module 170 are disposed in the processor 110.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. The gyroscope sensor 180B may be configured to determine a motion posture of the electronic device 100, for example, angular velocities of the electronic device 100 around three axes (that is, an x-axis, a y-axis, and a z-axis). The barometric pressure sensor 180C is configured to measure barometric pressure. The magnetic sensor 180D includes a Hall sensor. The acceleration sensor 180E may detect magnitudes of accelerations of the electronic device 100 in various directions (usually along the three axes). The distance sensor 180F is configured to measure a distance. The electronic device 100 may measure the distance by using infrared or lasers. In some embodiments, in a photographing scenario, the electronic device 100 may use the distance sensor 180F to measure a distance to implement fast focusing.

The optical proximity sensor 180G may include, for example, a light-emitting diode (LED) and an optical detector, for example, a photodiode. The light-emitting diode may be an infrared light-emitting diode. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed on the display 194, and the touch sensor 180K and the display 194 form a touchscreen. The touchscreen is also referred to as a "touch panel". The bone conduction sensor 180M may obtain a vibration signal.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

The electronic device 100 may implement a photographing function through an image processor (Image Signal Processor, ISP), the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. The ISP is not limited to being integrated into the processor 110, and may alternatively be disposed in the camera 193.

The camera 193 includes the lens and the photosensitive element (which may also be referred to as an image sensor), and is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal, for example, an image signal in a standard RGB or YUV format.

In some embodiments, the camera 193 may be configured to collect depth data. For example, the camera 193 may have a time of flight (time of flight, TOF) 3D sensing module or a structured light (structured light) 3D sensing module, configured to obtain depth information. The camera configured to collect the depth data may be a front-facing camera, or may be a rear-view camera.

The video codec is configured to compress or decompress a digital image. The electronic device 100 may support one or more image codecs. In this way, the electronic device 100 may open or store pictures or videos in a plurality of encoding formats.

The electronic device 100 may implement a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like, for example, an image captured by the camera 193. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 194.

It should be understood that the electronic device 100 shown in FIG. 1 is merely an example, and the electronic device 100 may have more or fewer components than those shown in FIG. 1, or may combine two or more components, or may have different component configurations. Various components shown in FIG. 1 may be implemented in hardware including one or more signal processing and/or application-specific integrated circuits, software, or a combination of hardware and software.

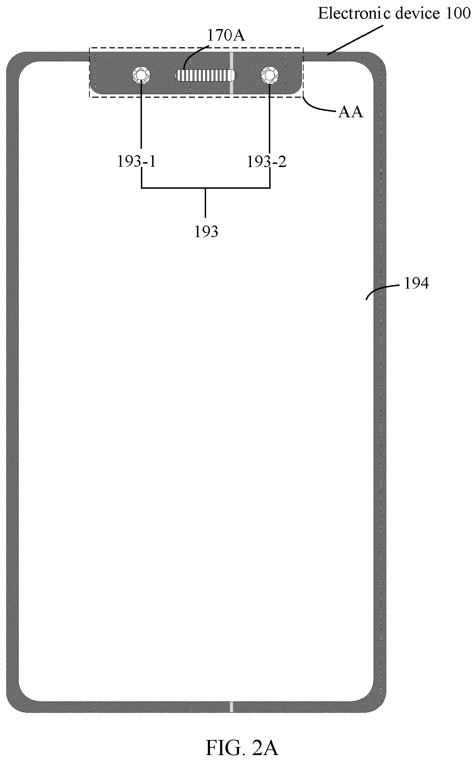

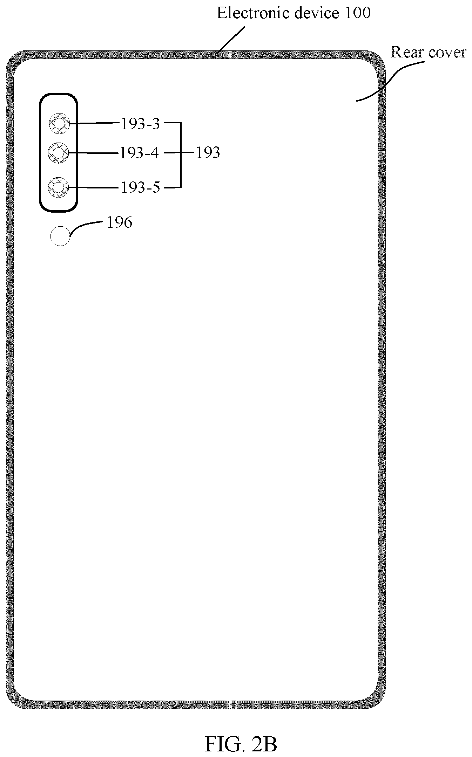

FIG. 2A and FIG. 2B show an example of an outline structure of the electronic device 100 according to an embodiment of this application. FIG. 2A shows a surface on which the display 194 of the electronic device 100 is located. FIG. 2B shows a surface on which a rear cover of the electronic device 100 is located.

The electronic device 100 may have a plurality of cameras 193. The electronic device 100 may include a plurality of front-facing cameras. As shown in FIG. 2A, a front-facing camera 193-1 and a front-facing camera 193-2 may be disposed on the top of the electronic device 100, for example, at a "notch" location of the electronic device 100 (that is, an area AA shown in FIG. 2A). In addition to the cameras 193, the area AA may further include the speaker 170A and the like. As shown in FIG. 2B, the electronic device 100 may include a plurality of rear-view cameras, for example, a rear-view camera 193-3, a rear-view camera 193-4, and a rear-view camera 193-5. The rear-view camera 193-3, the rear-view camera 193-4, and the rear-view camera 193-5 may be a common camera, a wide-angle camera, and a long-focus camera respectively. A flash 196 and the like may be further disposed near the cameras 193.

The camera 193 may change a field of view of a preview image in a preview box through digital zoom, or may change the field of view of the preview image in the preview box through optical zoom, or may change the field of view of the preview image by using a combination of the optical zoom and the digital zoom (also referred to as hybrid zoom). In other words, zoom may include the digital zoom, the optical zoom, or the hybrid zoom. The following uses the hybrid zoom as an example.

The electronic device 100 may change a camera used for photographing in the plurality of cameras 193 and implement, in combination with the digital zoom, a gradual change between sizes of preview fields of view presented by a series of images displayed in the preview box. The camera used for photographing may be a camera whose captured image is displayed in the preview box. The digital zoom may mean that the electronic device 100 increases an area of each pixel in the image captured by the camera 193, to change a focal length. This is equivalent to that the electronic device 100 crops an image captured by a camera, and then enlarges an image obtained through cropping, in other words, adjusts a resolution of the image obtained through cropping to be the same as a resolution of the image before cropping. In this way, compared with the image before cropping, an area of each pixel in an image obtained through cropping and enlargement is larger. In addition, an image in a part of fields of view is cropped, so that a preview field of view presented by the image obtained through cropping and enlargement is reduced. This is similar to an effect of increasing a focal length. However, actually, the digital zoom does not change the focal length of the camera.

It is assumed that an image captured by the common camera 193-3 is displayed in a current preview box, a current zoom ratio is 1X, and the long-focus camera 193-5 is not enabled. When detecting an operation of tapping a zoom point "5X" by a user, the electronic device 100 enables the long-focus camera 193-5, and performs zoom at a specific zoom step (for example, 0.1X) between 1X and 5X (for example, from 1X to 1.1X, 1.2X, ..., 4.9X, and 5X). In a process of zooming from 1X to 5X, the electronic device 100 may first crop an image captured by the common camera 193-3, where cropping in this phase may be center cropping. After the long-focus camera 193-5 runs, the electronic device 100 may perform, by using an FOV center offset algorithm, eccentric cropping on the image captured by the common camera 193-3, so that an FOV center of an image obtained through cropping gradually approaches an FOV center of the long-focus camera 193-5. The FOV center changes more smoothly, instead of suddenly jumping to the FOV center of the long-focus camera 193-5. In other words, the electronic device 100 performs digital zoom for a plurality of times on the image captured by the common camera 193-3. When the zoom ratio is increased to reach an optical zoom ratio (for example, 5X) of the long-focus camera 193-5, the electronic device 100 switches to the long-focus camera 193-5, and an image displayed in the preview box is changed to an image captured by the long-focus camera 193-5, in other words, the electronic device 100 performs optical zoom. In other words, when the zoom ratio is continuously increased, image display may include two phases: a phase of image capturing using the common camera 193-3 and a phase of image capturing using the long-focus camera 193-5. In the phase of image capturing using the common camera 193-3, the zoom ratio is gradually increased from 1X, for example, from 1X to 3X and from 3X to 4.9X. When the ratio is increased to 5X, the phase of image capturing using the long-focus camera 193-5 is switched to.

When a camera is used to capture an image, an FOV presented by an image that is from the camera and that is displayed in a preview box may be usually less than an FOV of the camera. In this case, the image in the preview box is cropped from the image captured by the camera. When a zoom ratio is changed to a specific ratio, an FOV presented by an image displayed in the preview box may be as large as the FOV of the camera. For example, in the phase of image capturing using the common camera 193-3 (that is, 1X to 4.9X), an FOV presented by an image displayed in the preview box is usually less than an FOV of the common camera 193-3. Even when the zoom ratio is 1X, an FOV presented by the image displayed in the preview box may be less than the FOV of the common camera 193-3.

How the electronic device 100 performs, based on the FOV center offset algorithm, eccentric cropping on the image captured by the common camera 193-3 is described in detail in a subsequent embodiment. Details are not described herein.

The following describes a typical photographing scenario in this application.

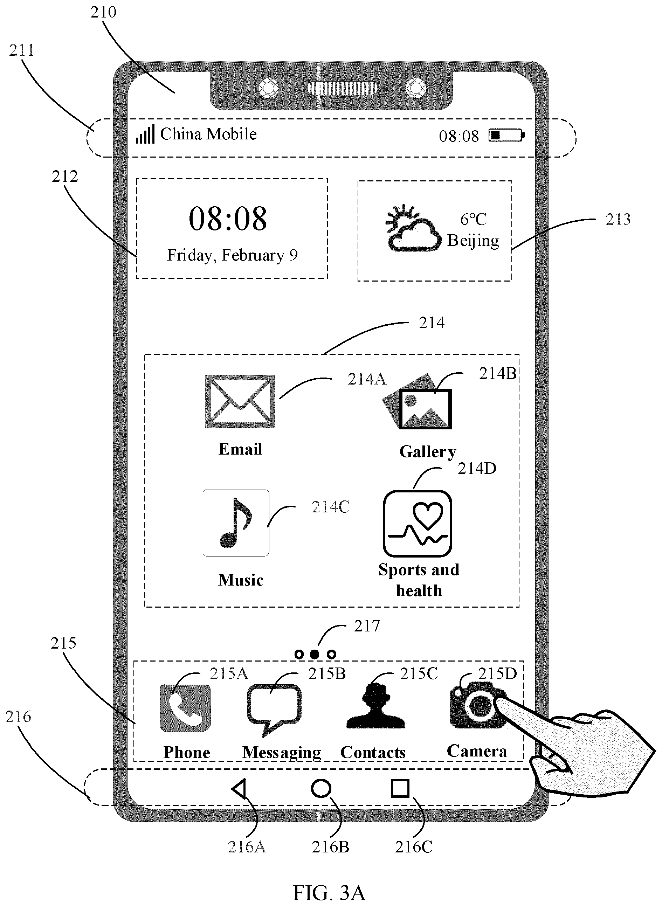

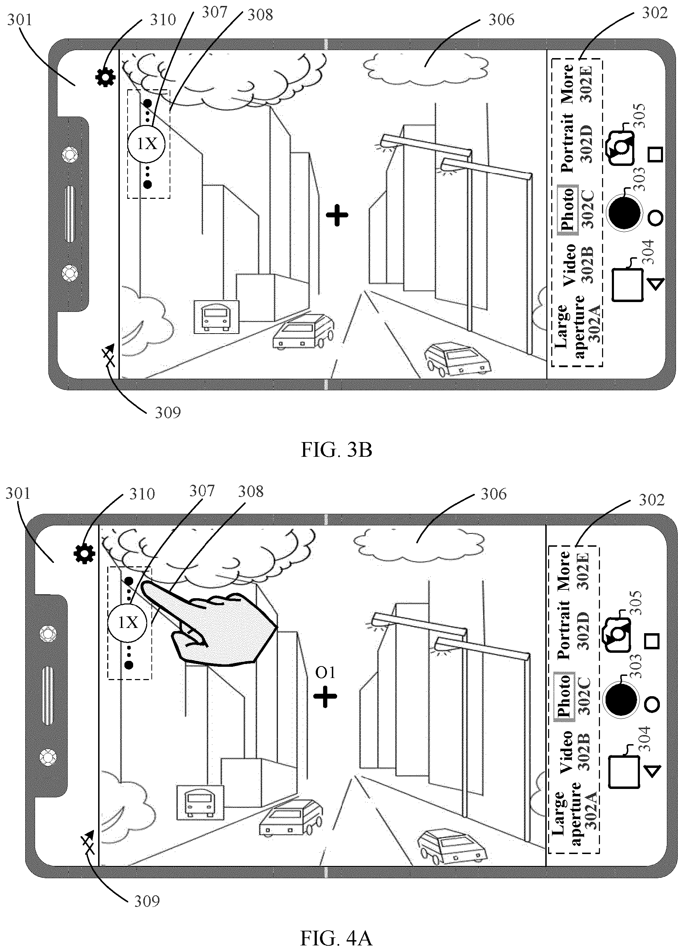

As shown in FIG. 3A and FIG. 3B, the electronic device 100 may detect an operation of opening a "camera" application by the user, for example, an operation of tapping a camera icon 215D on a home screen (Home screen) shown in FIG. 3A. In response to the operation, the electronic device 100 may display an example user interface 301 shown in FIG. 3B, namely, a user interface of the "camera" application. The home screen shown in FIG. 3A may include a status bar 211, a dock 215 having a common application table, a calendar indicator 212, a weather indicator 213, a navigation bar 216, another application icon 214, and the like. "Camera" is an image shooting application on the electronic device 100, for example, a smartphone or a tablet computer. A name of the application is not limited in this application. This is not limited in FIG. 3A and FIG. 3B. The user may alternatively open the user interface 301 in another application.

The user interface 301 may be a user interface of a default photographing mode of the "camera" application. The default photographing mode may be a default photographing mode of a common rear-view camera, or may be another photographing mode. This is not limited herein. As shown in FIG. 3B, the user interface 301 may include a setting control 310, a flash control 309, a zoom bar 308, a zoom ratio 307, a preview box 306, a camera flipping control 305, a gallery shortcut control 304, a shutter control 303, and a camera mode option 302.

The setting control 310 may be configured to: adjust a parameter (for example, a resolution or a filter) for photographing, enable or disable some photographing manners (for example, timed photographing, smile snapshot, and voice control photographing), and the like. The setting control 310 may be configured to set more other photographing functions. This is not limited in this embodiment of this application.

The flash control 309 may be configured to enable or disable a flash.

There are a plurality of zoom points on the zoom bar 308, and the plurality of zoom points indicate different zoom ratios. Different zoom points indicate different zoom ratios.

The zoom ratio 307 may indicate a current zoom ratio. A larger zoom ratio 307 indicates a smaller FOV presented by an image displayed in the preview box 306. On the contrary, a smaller zoom ratio 307 indicates a larger FOV presented by the image displayed in the preview box 306. As shown in FIG. 3B, 1X may be a default zoom ratio of the camera application. The default zoom ratio may alternatively be another value. The default zoom ratio is not limited in this embodiment of this application.

The preview box 306 may be used to display an image captured by the camera 193 in real time. The electronic device 100 may refresh display content in the preview box in real time, so that the user previews an image currently captured by the camera 193.

The camera switching control 305 may be configured to monitor a user operation that triggers camera switching. In response to the operation, the electronic device 100 may switch a camera, for example, switch from a rear-view camera to a front-facing camera.

The gallery shortcut key 304 may be used to open a gallery application. In response to a user operation performed on the gallery shortcut key 304, for example, a tap operation, the electronic device 100 may open the gallery application. In this way, the user can conveniently view captured photos and videos without a need to first exit the camera application and then open the gallery application. The gallery application is a picture management application on the electronic device, for example, the smartphone or the tablet computer, and may also be referred to as "album". A name of the application is not limited in this embodiment. The gallery application may support the user in performing various operations on a picture stored in the electronic device 100, for example, operations such as browsing, editing, deleting, and selecting. In addition, the electronic device 100 may further display a thumbnail of a stored image in the gallery shortcut key 304.

The shutter control 303 may be configured to monitor a user operation that triggers photographing. In response to the operation, the electronic device 100 may save the image in the preview box 307 as a picture in the gallery application.

One or more photographing mode options may be displayed in the camera mode option 302. The one or more photographing mode options may include: a large aperture mode option 302A, a video mode option 302B, a photo mode option 302C, a portrait mode option 302D. and a more option 302E. When detecting a user operation performed on the photographing mode option, the electronic device 100 may enable a photographing mode selected by the user. Particularly, when detecting a user operation performed on the more option 302E, the electronic device 100 may further display more other photographing mode options such as a slow-mo photographing mode option, to display more abundant photographing functions to the user. This is not limited in FIG. 3B. The camera mode option 302 may not display the more option 302E, and the user may browse other photographing mode options by sliding leftwards/rightwards in the camera mode option 302.

Based on the photographing scenario, the following describes some user interfaces (user interfaces, UIs) implemented on the electronic device 100.

FIG. 4A to FIG. 4H show an example of user interfaces for performing zoom in in a preview scenario. In the embodiment of FIG. 4A to FIG. 4H, it is assumed that an optical zoom ratio of the long-focus camera is 5X, an optical zoom ratio of the common camera is 1X, a camera enabled by the electronic device 100 by default is the common camera, and the electronic device 100 enables the long-focus camera after detecting an operation of tapping a 5X zoom point on the zoom bar 308 by the user.

FIG. 4A shows an example of the preview scenario: An image (which may be referred to as a preview image) displayed in the preview box 306 is from the common camera, and the zoom ratio 307 is 1X.

In the preview scenario shown in FIG. 4A, the electronic device 100 may detect an operation of increasing the zoom ratio by the user (for example, a tap operation of the user for the 5X zoom point on the zoom bar 308). In response to the operation, the electronic device 100 may reduce an FOV presented by the preview image. In addition, the zoom ratio 307 displayed in the preview box 306 is gradually increased. When the zoom ratio is increased to 5X, the electronic device 100 may display, in the preview box 306, an image captured by the long-focus camera, in other words, the preview image is changed to the image from the long-focus camera, in other words, the electronic device 100 performs optical zoom. It is assumed that a minimum change unit of the zoom ratio is 0.1X. In this case, 4.9X to 5X is an optical zoom ratio range for switching from the common camera to the long-focus camera.

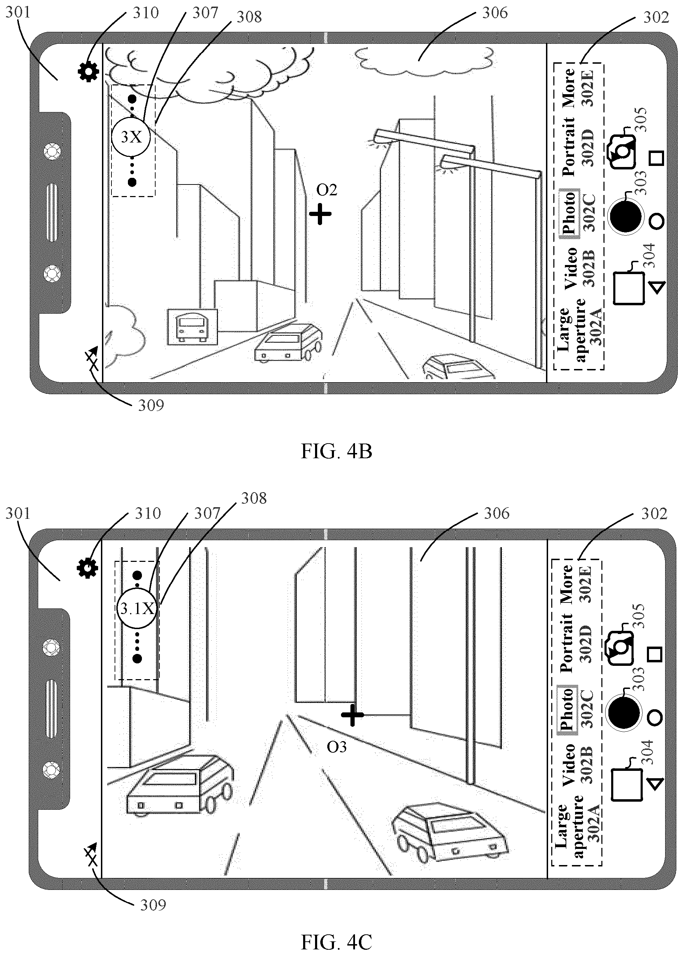

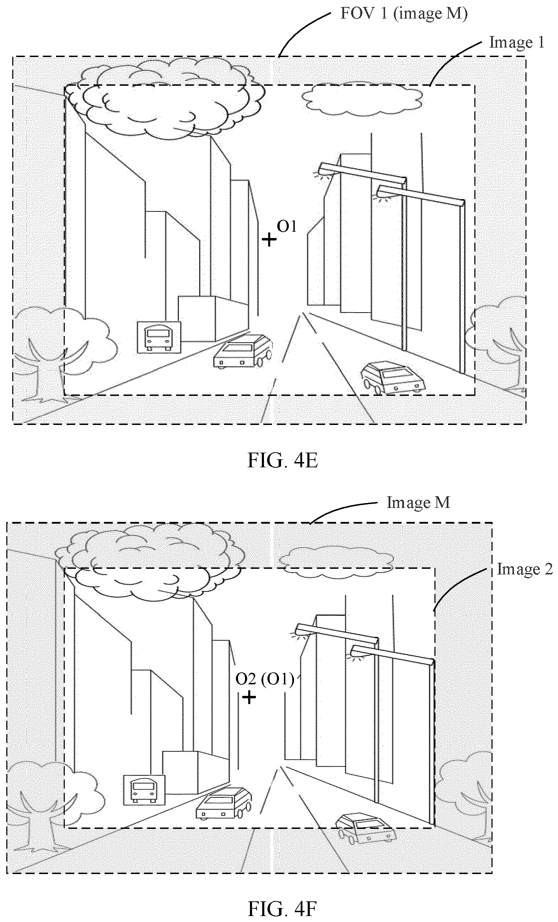

As shown in FIG. 4A and FIG. 4B, for example, in a process in which the zoom ratio 307 is increased from 1X to 3X, the common camera is always in a running state, and the long-focus camera is in a startup state and does not enter a running state. Therefore, in this process, only the common camera captures an image, and the electronic device 100 gradually reduces the FOV presented by the preview image (to be specific, performs center cropping on an image M shown in FIG. 4E). An FOV center O1 presented by a 1X preview image coincides with an FOV center O2 presented by a 3X preview image.

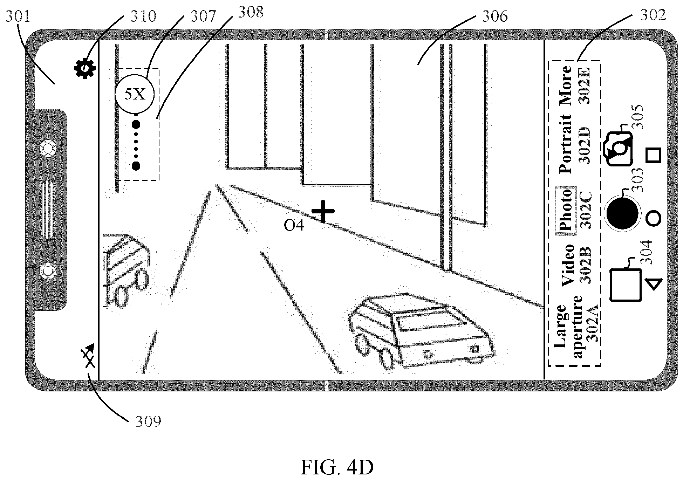

As shown in FIG. 4C and FIG. 4D, for example, when the zoom ratio 307 is increased to 3.1X, the common camera is in the running state, and the long-focus camera starts to enter the running state, in other words, the common camera and the long-focus camera start to capture images simultaneously. In a process in which the zoom ratio 307 is increased from 3.1X to 4.9X, the common camera and the long-focus camera are always in the running state, and capture images simultaneously until the zoom ratio 307 is increased to 5X. When the zoom ratio is 5X, the common camera is disabled, and the long-focus camera is still in the running state. In this case, only the long-focus camera captures an image.

In a process in which the zoom ratio 307 is increased from 3.1X to 5X, in addition to gradually reducing the FOV presented by the preview image, the electronic device 100 may further move an FOV center of the preview image towards an FOV center of the long-focus camera, instead of enabling the FOV center to directly jump from an FOV center of the common camera to the FOV center of the long-focus camera. As the zoom ratio is continuously increased to the optical zoom ratio 5X of the long-focus camera, the FOV center of the preview image gradually approaches and even finally coincides with the FOV center of the long-focus camera. This avoids an FOV center jump.

Specifically, FIG. 4A, FIG. 4B, FIG. 4C, and FIG. 4D respectively show 1X, 3X, 3.1X, and 5X preview images, and FOV centers of the 1X, 3X, 3.1X, and 5X preview images are respectively located at locations O1, O2, O3, and O4. It can be learned that O3 is closer to O4 than O2. In this way, when the zoom ratio is increased from 1X to 5X, the FOV center of the preview image does not suddenly change from O1 to O4, but transits more smoothly, and no jump occurs.

With reference to FIG. 4E to FIG. 4H, the following describes an implementation principle of an example zoom-in process shown in FIG. 4A to FIG. 4D.

As shown in FIG. 4E to FIG. 4H, the image M is an image captured by the common camera, an FOV 1 is an FOV of the common camera, and an FOV 2 is an FOV of the long-focus camera. The FOV of the common camera covers the FOV of the long-focus camera, and a distance between the FOV center O4 of the long-focus camera and the FOV center O1 of the common camera is long. This long distance is caused by a fact that optical centers of the long-focus camera and the common camera do not coincide with each other. To avoid the FOV center jump occurring in a zoom process due to this cause, when cropping the image M captured by the common camera, the electronic device 100 may enable a cropping center of a cropping area to gradually approach the FOV center of the long-focus camera, in other words, execute an FOV center offset algorithm to implement eccentric cropping.

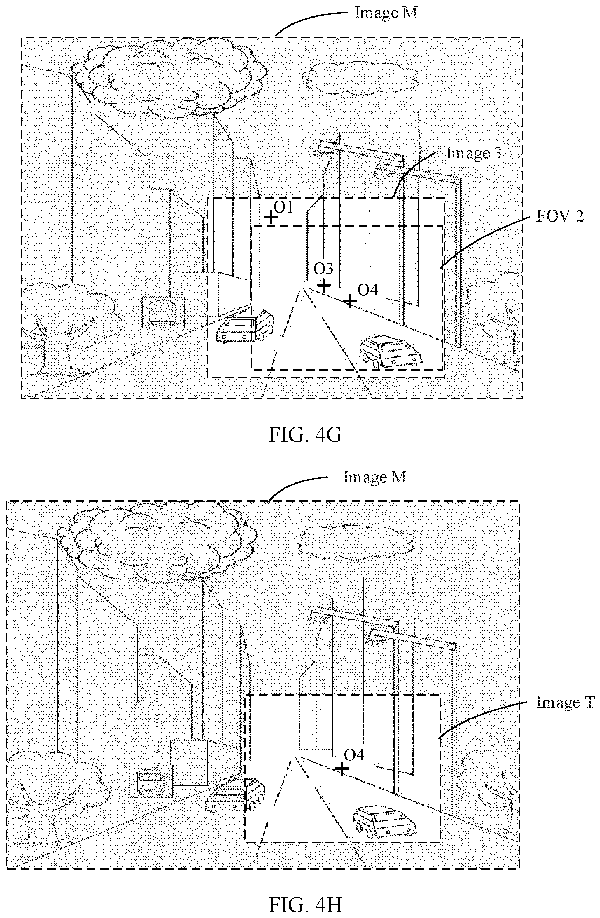

Specifically, as shown in FIG. 4E, an image 1 is the 1X preview image, and the image 1 may be obtained by cropping the image M. An FOV center of the image 1 coincides with the center O1 of the FOV 1. As shown in FIG. 4F, an image 2 is the 3X preview image, and the image 2 may be obtained by cropping the image M. An FOV center of the image 2 coincides with the center O1 of the FOV 1. As shown in FIG. 4G, an image 3 is a 3.1X preview image, and the image 3 may be obtained by cropping the image M. An FOV center of the image 3 no longer coincides with the center O1 of the FOV 1, but deviates from O1 and is closer to the FOV center O4 of the long-focus camera. As shown in FIG. 4H, an image T is a 5X preview image, and the image T is an image captured by the long-focus camera. An FOV center of the image T coincides with the FOV center O4 of the long-focus camera.

FIG. 4E to FIG. 4H describe an implementation of the FOV center offset algorithm by using only an example in which the FOV center offset algorithm is executed when the long-focus camera starts to run. In other words, the electronic device executes the FOV center offset algorithm in an entire digital zoom-in process from 3X to 3.1X, 3.2X, ..., and 4.9X. This is not limited thereto. The electronic device 100 may alternatively execute the FOV center offset algorithm a period of time after the long-focus camera starts to run (for example, after the electronic device 100 increases the zoom ratio to 4X). For example, the electronic device 100 may execute the FOV center offset algorithm in an entire digital zoom-in process from 4X to 4.1X, 4.2X, ..., and 4.9X. In addition, in this embodiment of this application, a speed of approaching the FOV center of the long-focus camera through cropping by using the FOV center offset algorithm is not limited. For example, the electronic device 100 may move the FOV center towards the FOV center of the long-focus camera once every 0.1X change of the zoom ratio, or may move the FOV center towards the FOV center of the long-focus camera once every 0.2X change of the zoom ratio.

In some embodiments, an FOV of the image 1 may also be the FOV 1, in other words, the image M may be the 1X preview image.

A manner of increasing the zoom ratio described in the embodiment of FIG. 4A to FIG. 4H is also applicable to a scenario of switching from the wide-angle camera to the common camera, a scenario of switching from the ultra-wide-angle camera to the wide-angle camera, and a scenario of switching from the long-focus camera to the ultra-long-focus camera. This is not limited in this embodiment of this application.

It should be noted that, in this embodiment of this application, the implementation of the FOV center offset algorithm is described by using only an example in which the long-focus camera starts to run after the zoom ratio is increased to 3X. In some embodiments, the long-focus camera may alternatively start to run after the zoom ratio is increased to another ratio (for example, 2X, 3.5X, or 4X). This is not limited in this embodiment of this application.

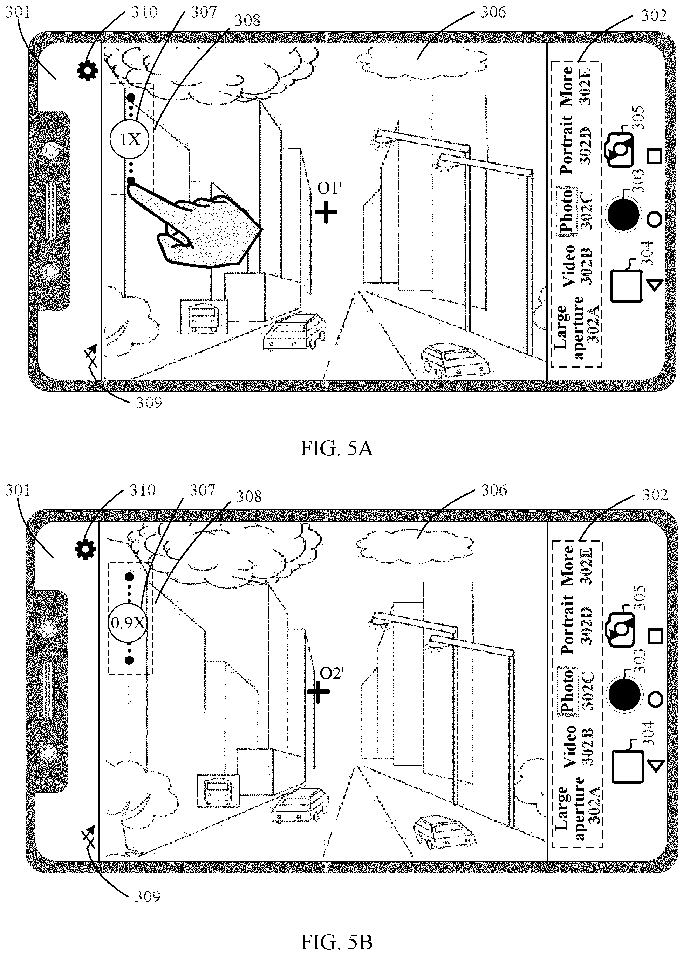

FIG. 5A to FIG. 5H show an example of user interfaces for performing zoom out in a preview scenario. In the embodiment of FIG. 5A to FIG. 5H, it is assumed that an optical zoom ratio of the common camera is 1X, an optical zoom ratio of the wide-angle camera is 0.4X (wide), a camera enabled by the electronic device 100 by default is the common camera, and the electronic device 100 enables the wide-angle camera after detecting an operation of tapping a 0.4X zoom point on the zoom bar 308 by the user.

FIG. 5A shows an example of the preview scenario: An image (which may be referred to as a preview image) displayed in the preview box 306 is from the common camera, and the zoom ratio 307 is 1X.

In the preview scenario shown in FIG. 5A, the electronic device 100 may detect an operation of decreasing the zoom ratio by the user (for example, a tap operation of the user for the 0.4X zoom point on the zoom bar 308). In response to the operation, the electronic device 100 may expand an FOV presented by the preview image. In addition, the zoom ratio 307 displayed in the preview box 306 is gradually decreased. When the zoom ratio is decreased to 0.4X, the electronic device 100 may display, in the preview box 306, an image captured by the wide-angle camera, in other words, the preview image is changed to the image from the wide-angle camera, in other words, the electronic device 100 performs optical zoom. It is assumed that a minimum change unit of the zoom ratio is 0.1X. In this case, 0.5X to 0.4X is a zoom ratio range for switching from the common camera to the wide-angle camera.

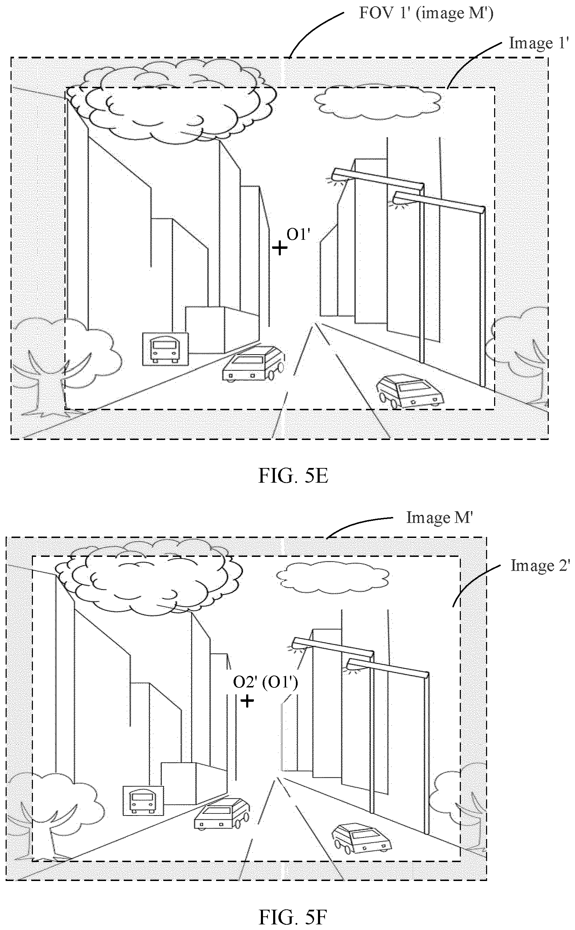

As shown in FIG. 5A and FIG. 5B, for example, in a process in which the zoom ratio 307 is decreased from 1X to 0.9X, the common camera is always in a running state, and the wide-angle camera is in a startup state and does not enter a running state. Therefore, in this process, only the common camera captures an image, and the electronic device 100 gradually expands the FOV presented by the preview image (to be specific, performs center cropping on an image M' shown in FIG. 5E). An FOV center O1 presented by a 1X preview image coincides with an FOV center O2 presented by a 0.9X preview image.

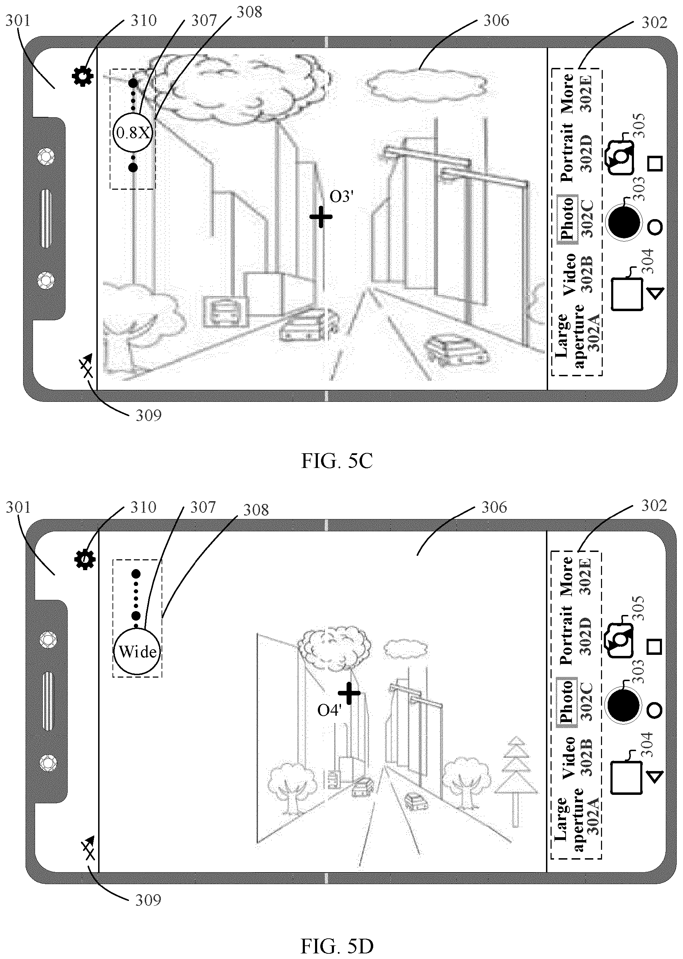

As shown in FIG. 5C and FIG. 5D, for example, when the zoom ratio 307 is decreased to 0.8X, the common camera is in the running state, and the wide-angle camera starts to enter the running state, in other words, the common camera and the wide-angle camera start to capture images simultaneously. In a process in which the zoom ratio 307 is decreased from 0.8X to 0.4X, the common camera and the wide-angle camera are always in the running state, and capture images simultaneously until the zoom ratio 307 is decreased to 0.4X. When the zoom ratio is 0.4X, the common camera is disabled, and the wide-angle camera is still in the running state. In this case, only the wide-angle camera captures an image. In the process in which the zoom ratio 307 is decreased from 0.8X to 0.4X, in addition to gradually expanding the FOV presented by the preview image, the electronic device 100 may further move an FOV center of the preview image towards an FOV center of the wide-angle camera, instead of enabling the FOV center to directly jump from an FOV center of the common camera to the FOV center of the wide-angle camera. As the zoom ratio is continuously decreased to the optical zoom ratio 0.4X of the wide-angle camera, the FOV center of the preview image gradually approaches and even finally coincides with the FOV center of the wide-angle camera. This avoids an FOV center jump.

Specifically, FIG. 5A, FIG. 5B, FIG. 5C, and FIG. 5D respectively show 1X, 0.9X, 0.8X, and 0.4X preview images, and FOV centers of the 1X, 0.9X, 0.8X, and 0.4X preview images are respectively located at locations O1', O2', O3', and O4'. It can be learned that O3' is closer to O4' than O2'. In this way, when the zoom ratio is decreased from 1X to 0.4X, the FOV center of the preview image does not suddenly change from O1' to O4', but transits more smoothly, and no jump occurs.

With reference to FIG. 5E to FIG. 5H, the following describes an implementation principle of an example zoom-out process shown in FIG. 5A to FIG. 5D.

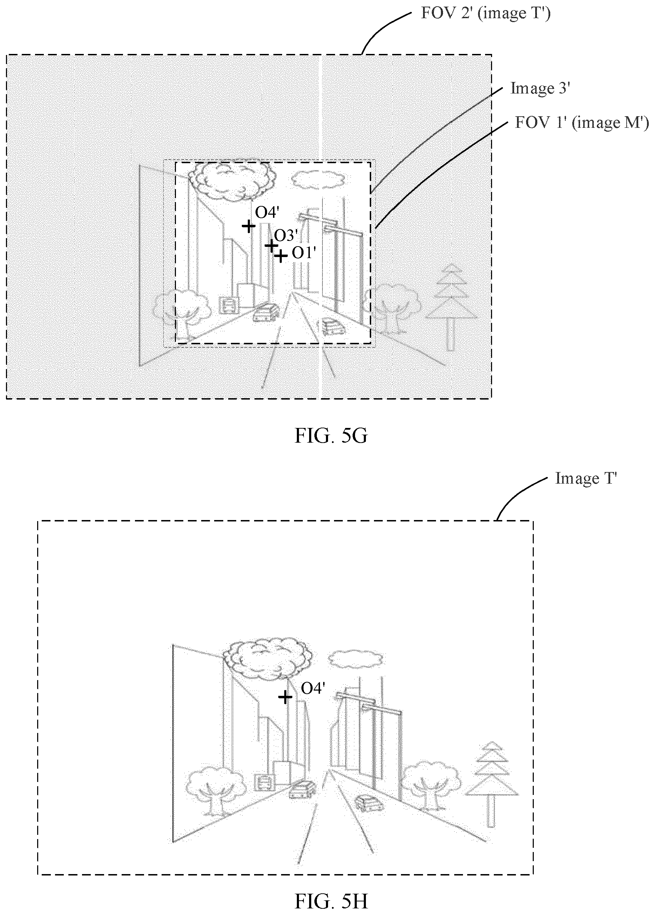

As shown in FIG. 5E to FIG. 5H, the image M' is an image captured by the common camera, an FOV 1' is an FOV of the common camera, and an FOV 2' is an FOV of the wide-angle camera. The FOV of the wide-angle camera covers the FOV of the common camera, and a distance between the FOV center O4' of the wide-angle camera and the FOV center O1' of the common camera is long. This long distance is caused by a fact that optical centers of the wide-angle camera and the common camera do not coincide with each other. To avoid the FOV center jump occurring in a zoom process due to this cause, as shown in FIG. 5G and FIG. 5H, when cropping the image M' captured by the common camera, the electronic device 100 may enable a cropping center of a cropping area to gradually approach the FOV center of the wide-angle camera, in other words, execute an FOV center offset algorithm to implement eccentric cropping.

Specifically, as shown in FIG. 5E, an image 1' is the 1X preview image, and the image 1' may be obtained by cropping the image M'. An FOV center of the image 1' coincides with the center O1' of the FOV 1'. As shown in FIG. 5F, an image 2' is the 0.9X preview image, and the image 2' may be obtained by cropping the image M'. An FOV center of the image 2' coincides with the center O1' of the FOV 1'. As shown in FIG. 5G, an image 3' is a 0.8X preview image, and the image 3' may be obtained by cropping the image M'. An FOV center of the image 3' no longer coincides with the center O1' of the FOV 1', but deviates from O1' and is closer to the FOV center O4' of the wide-angle camera. As shown in FIG. 5H, an image T' is a 0.4X preview image, and the image T' is an image captured by the wide-angle camera. An FOV center of the image T' coincides with the FOV center O4' of the wide-angle camera.

FIG. 5E to FIG. 5H describe an implementation of the FOV center offset algorithm by using only an example in which the FOV center offset algorithm is executed when the wide-angle camera starts to run. In other words, the electronic device executes the FOV center offset algorithm in an entire digital zoom-out process from 0.9X to 0.8X, 0.7X, ..., and 0.4X. This is not limited thereto. The electronic device 100 may alternatively execute the FOV center offset algorithm a period of time after the wide-angle camera starts to run (for example, after the electronic device 100 decreases the zoom ratio to 0.6X). For example, the electronic device 100 may execute the FOV center offset algorithm in an entire digital zoom-out process from 0.6X to 0.5X and then 0.4X. In addition, in this embodiment of this application, a speed of approaching the FOV center of the wide-angle camera through cropping by using the FOV center offset algorithm is not limited. For example, the electronic device 100 may move the FOV center towards the FOV center of the long-focus camera once every 0.1X change of the zoom ratio, or may move the FOV center towards the FOV center of the long-focus camera once every 0.2X change of the zoom ratio.

In this embodiment of this application, an FOV of the image 1' needs to be less than the FOV 1'. In this way, it can be ensured that in a process of switching from the common camera to the wide-angle camera, smooth transition is implemented by cropping the image M' captured by the common camera, and a phenomenon of the FOV center jump is avoided. The following describes a possible implementation in which the FOV of the image 1' is less than an FOV'. It is assumed that a zoom ratio corresponding to the FOV of the image 1' is A, and a zoom ratio corresponding to the FOV' is B. In this case, A=B*C, where C is a constant greater than 1. For example, if B=1X and C=2, A=2X. In other words, when the zoom ratio 307 is displayed as 1X, the preview image actually corresponds to an image at the zoom ratio of 2X. It is easy to understand that, through mapping between an actual zoom ratio and a zoom ratio displayed by the zoom ratio 307, the FOV of the image 1' may be less than FOV'.

A manner of decreasing the zoom ratio described in the embodiment of FIG. 5A to FIG. 5H is also applicable to a scenario of switching from the wide-angle camera to the ultra-wide-angle camera, a scenario of switching from the long-focus camera to the common camera, and a scenario of switching from the ultra-long-focus camera to the long-focus camera. This is not limited in this embodiment of this application.

It should be noted that, in this embodiment of this application, the implementation of the FOV center offset algorithm is described by using only an example in which the wide-angle camera starts to run after the zoom ratio is decreased to 0.9X. In some embodiments, the wide-angle camera may alternatively start to run after the zoom ratio is decreased to another ratio (for example, 0.8X or 0.7X). This is not limited in this embodiment of this application.

Example user interfaces of zoom preview shown in FIG. 4A to FIG. 4D and FIG. 5A to FIG. 5D may be further used to describe a scenario in which the user photographs in a zoom process.

For example, based on user interfaces for increasing the zoom ratio in the preview scenario shown in FIG. 4A to FIG. 4D, the electronic device 100 may further detect photographing operations of the user, for example, photographing operations at 3X, 3.1X, 3.3X, ..., and 5X. In response to the operations, the electronic device 100 may save images at different zoom ratios in the preview box as photos. In this case, FOV centers presented by these photos are smoothly transited.

For example, based on user interfaces for decreasing the zoom ratio in the preview scenario shown in FIG. 5A to FIG. 5D, the electronic device 100 may further detect photographing operations of the user, for example, photographing operations at 0.9X, 0.8X, 0.7X, ..., and 0.4X. In response to the operations, the electronic device 100 may save images at different zoom ratios in the preview box as photos. In this case, FOV centers presented by these photos are smoothly transited.

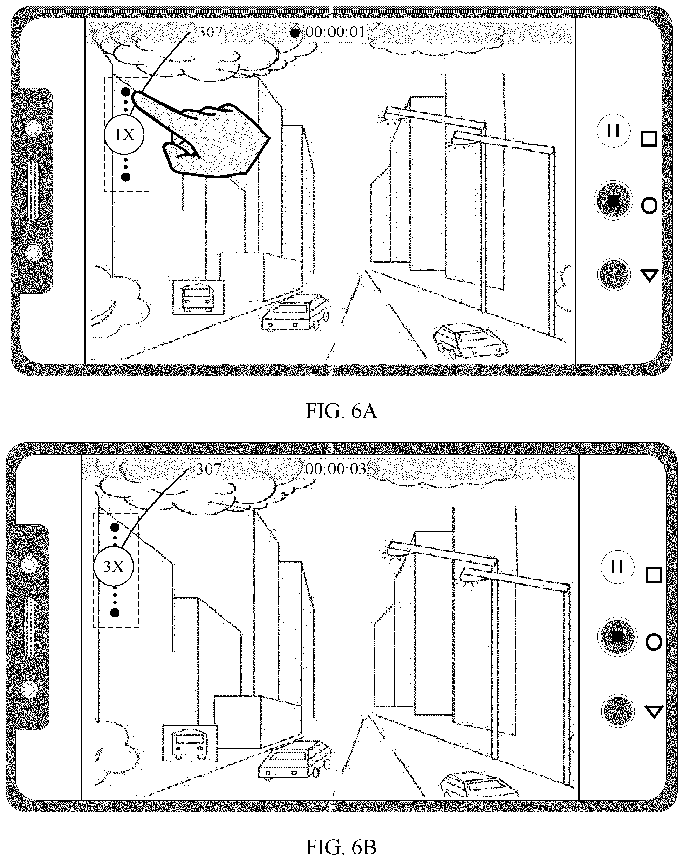

FIG. 6A to FIG. 6H show an example of user interfaces for performing zoom in a video recording scenario.

(1) FIG. 6A to FIG. 6D show an example of user interfaces for performing zoom in in the video recording scenario.

In the embodiment of FIG. 6A to FIG. 6D, it is assumed that an optical zoom ratio of the long-focus camera is 5X, an optical zoom ratio of the common camera is 1X, a camera enabled by the electronic device 100 by default is the common camera, and the electronic device 100 enables the long-focus camera after detecting an operation of tapping a 5X zoom point on the zoom bar 308 by the user.

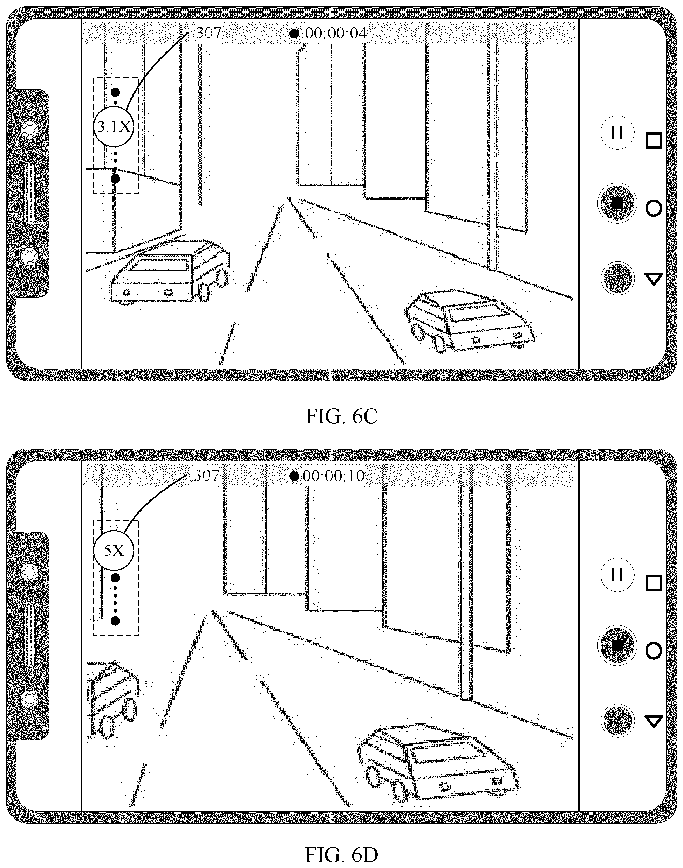

Same as the embodiment shown in FIG. 4A to FIG. 4D, in a zoom-in video recording process shown in FIG. 6A, FIG. 6B, FIG. 6C, and FIG. 6D, the electronic device 100 may detect an operation of increasing the zoom ratio by the user (for example, a tap operation of the user for the 5X zoom point on the zoom bar 308). In response to the operation, in a process in which the zoom ratio 307 is increased from 1X to 3X, the electronic device 100 may gradually reduce an FOV presented by a preview image. In a process in which the zoom ratio 307 is increased from 3.1X to 5X, in addition to gradually reducing the FOV presented by the preview image, the electronic device 100 may further move an FOV center of the preview image towards an FOV center of the long-focus camera, instead of enabling the FOV center to directly jump from an FOV center of the common camera to the FOV center of the long-focus camera. As the zoom ratio is continuously increased to the optical zoom ratio 5X of the long-focus camera, the FOV center of the preview image gradually approaches and even finally coincides with the FOV center of the long-focus camera. This avoids an FOV center jump.

A difference from the embodiment shown in FIG. 4A to FIG. 4D lies in that images in the preview box in FIG. 6A to FIG. 6D, namely, recorded images, may be saved as a video.

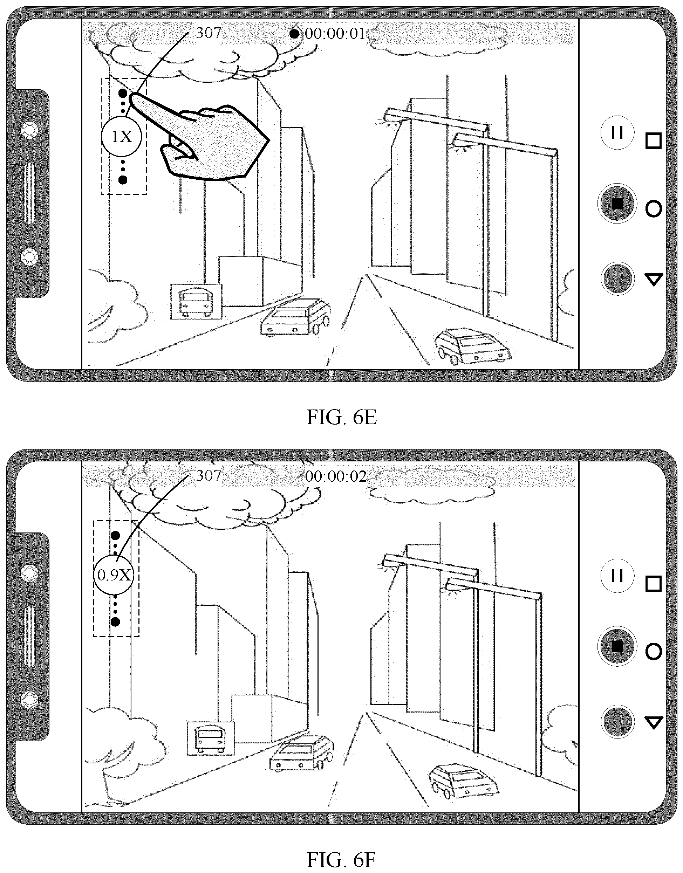

(2) FIG. 6E to FIG. 6H show an example of user interfaces for performing zoom out in the video recording scenario.

In the embodiment of FIG. 6E to FIG. 6H, it is assumed that an optical zoom ratio of the common camera is 1X, an optical zoom ratio of the wide-angle camera is 0.4X (wide), a camera enabled by the electronic device 100 by default is the common camera, and the electronic device 100 enables the wide-angle camera after detecting an operation of tapping a 0.4X zoom point on the zoom bar 308 by the user.

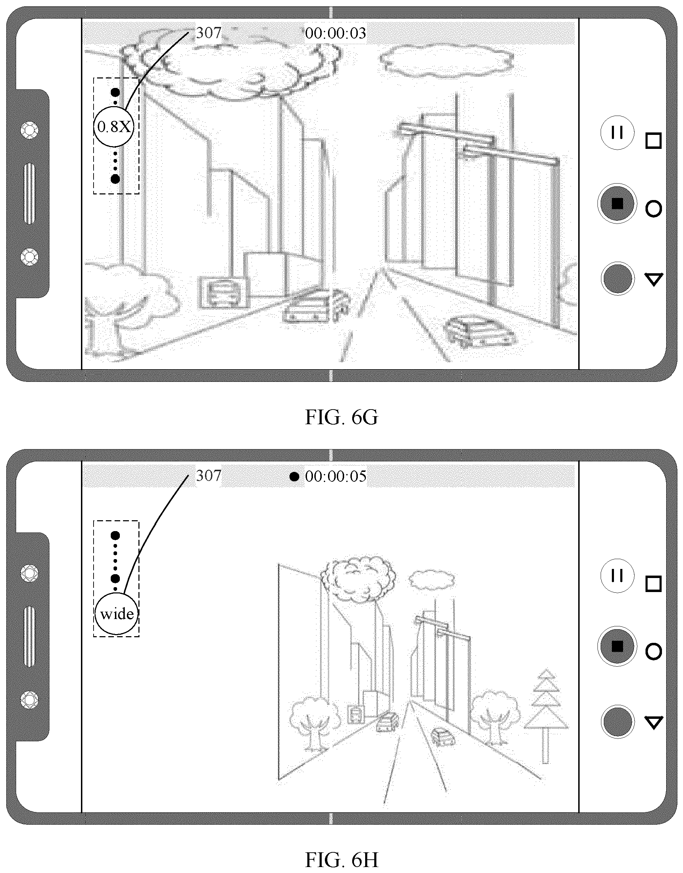

Same as the embodiment shown in FIG. 5A to FIG. 5D, in a zoom-out video recording process shown in FIG. 6E, FIG. 6F, FIG. 6G, and FIG. 6H, the electronic device 100 may detect an operation of decreasing the zoom ratio by the user (for example, a tap operation of the user for the 0.4X zoom point on the zoom bar 308). In response to the operation, in a process in which the zoom ratio 307 is decreased from 1X to 0.9X, the electronic device 100 gradually expands an FOV presented by a preview image. In a process in which the zoom ratio 307 is decreased from 0.8X to 0.4X, in addition to gradually expanding the FOV presented by the preview image, the electronic device 100 may further move an FOV center of the preview image towards an FOV center of the wide-angle camera, instead of enabling the FOV center to directly jump from an FOV center of the common camera to the FOV center of the wide-angle camera. As the zoom ratio is continuously decreased to the optical zoom ratio 0.4X of the wide-angle camera, the FOV center of the preview image gradually approaches and even finally coincides with the FOV center of the wide-angle camera. This avoids an FOV center jump.

A difference from the embodiment shown in FIG. 5A to FIG. 5D lies in that images in the preview box in FIG. 6E to FIG. 6H, namely, recorded images, may be saved as a video.

Based on the UI embodiments, the following describes a method procedure for implementing smooth FOV center transition by the electronic device 100 in a tap-to-zoom scenario.

In embodiments of this application, "tap-to-zoom" is a process in which the user switches a current zoom point (which may also be referred to as a first zoom ratio option) to a target zoom point by performing a tap operation for a zoom point other than the current zoom point on the zoom bar 308. For example, in FIG. 4A, the user switches a current zoom point 1X to a target zoom point 5X by performing the tap operation for the 5X zoom point on the zoom bar 308. For another example, in FIG. 5A, the user switches a current zoom point 1X to a target zoom point 0.4X by performing the tap operation for the 0.4X zoom point on the zoom bar 308.

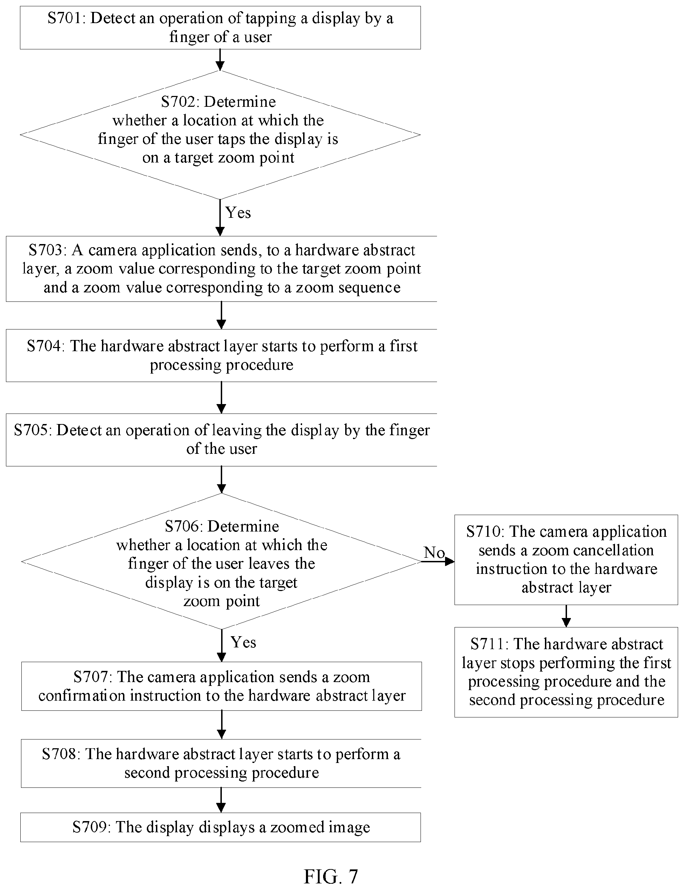

FIG. 7 shows an example of the method procedure for implementing smooth FOV center transition by the electronic device 100 in the tap-to-zoom scenario. The following describes in detail specific steps of the method by using an example in which the current zoom point is a 1X zoom point, the target zoom point is a 5X zoom point, and the user perform tap-to-zoom from the 1X zoom point to the 5X zoom point.

S701: The electronic device 100 detects an operation of tapping the display by a finger of the user.

S702: The electronic device 100 determines whether a location at which the finger of the user taps the display is on the target zoom point, where the target zoom point is different from the current zoom point.

Specifically, after detecting the operation of tapping the display by the finger of the user, the electronic device 100 may determine whether the location at which the finger of the user taps the display is in a hotspot of the target zoom point. If yes, it may indicate that the location at which the finger of the user taps the display is on the target zoom point. The hotspot of the target zoom point is an area, on the display, including a location of the target zoom point.

S703: A camera application of the electronic device 100 sends, to a hardware abstract layer (Hardware Abstract Layer, HAL), a zoom value corresponding to the target zoom point and a zoom value corresponding to a zoom sequence.

The zoom sequence is a set including a plurality of zoom ratios between the target zoom point (for example, the 5X zoom point) and the current zoom point (for example, the 1X zoom point).

For example, if the electronic device 100 determines that the location at which the finger of the user taps the display is in a hotspot of the 5X zoom point, it indicates that the location at which the finger of the user taps the display is on the 5X zoom point. Then, the camera application of the electronic device 100 may send, to the hardware abstract layer, a zoom value corresponding to the 5X zoom point and a zoom value corresponding to a zoom sequence. In this way, it can be avoided that the hardware abstract layer does not have sufficient time to perform subsequent related steps because there is a specific delay in sending, by the camera application, the zoom value corresponding to the 5X zoom point to the hardware abstract layer. The zoom value corresponding to the 5X zoom point is a corresponding zoom value at a zoom ratio of 5X, and the zoom value corresponding to the zoom sequence is a zoom value corresponding to each zoom ratio in the zoom sequence.

A formula for calculating the zoom value zoom Value corresponding to the zoom sequence is as follows:

$$\mathrm{zoomValue}= 2^{\frac{S}{T}*t*n}$$

S is a distance, on the display, between the current zoom point and the target zoom point on the zoom bar. T is time required for smooth transition from the current zoom point to the target zoom point (namely, time required from tapping the current zoom point by the user to displaying a preview image corresponding to the target zoom point by the display), and may be obtained from the hardware abstract layer. t is a time interval between two adjacent preview frames of a current camera system, and may be obtained from the hardware abstract layer. n is a sequence number of a zoom ratio in the zoom sequence, n is a positive integer, a value range of n is (0, N], and N=T/t, in other words, N is a total quantity of frames that need to be inserted within the time T.

It is easy to understand that a quantity of zoom ratios included in the zoom sequence is determined by N. For example, the current zoom point is 1X, the target zoom point is 5X, and a minimum change unit of the zoom ratio is 0.1X. In a possible implementation, the zoom sequence may be [1.1X 1.2X 1.3X ... 4.9X 5X], and the value range of the sequence number n of the zoom sequence is (0, 40]. n=1 corresponds to a zoom ratio of 1.1X, n=2 corresponds to a zoom ratio of 1.2X, and by analogy, n=40 corresponds to the zoom ratio of 5X. In another possible implementation, the zoom sequence may alternatively be [1.2X 1.4X ... 4.8X 5X], and the value range of the sequence number n of the zoom sequence is (0, 20). n=1 corresponds to a zoom ratio of 1.2X, n=2 corresponds to a zoom ratio of 1.4X, and by analogy, n=20 corresponds to the zoom ratio of 5X.

It is easy to understand that, because a time interval between time at which the camera application sends zoom values corresponding to zoom ratios in the zoom sequence to the hardware abstract layer is determined by the time interval between the preview frames of the current camera system, time required for the camera application to send all zoom values corresponding to the zoom sequence one by one is the time T required for smooth transition from the current zoom point to the target zoom point.

In a possible implementation, the camera application may send, to the hardware abstract layer at one time, all the zoom values corresponding to the zoom sequence. The hardware abstract layer may establish, based on the time interval between the preview frames of the current camera system, a one-to-one correspondence between each ratio value and a corresponding image preview frame, to complete a smooth zoom process.

S704: The hardware abstract layer of the electronic device 100 starts to perform a first processing procedure.

The hardware abstract layer of the electronic device 100 may start to perform the first processing procedure based on the received zoom value corresponding to the zoom point and the received zoom value corresponding to the zoom sequence that are sent by the camera application. A specific process of performing the first processing procedure is described in detail below, and is not described herein.

S705: The electronic device 100 detects an operation of leaving the display by the finger of the user.

S706: The electronic device 100 determines whether a location at which the finger of the user leaves the display is on the zoom point.

Specifically, after detecting the operation of leaving the display by the finger of the user, the electronic device 100 may determine whether the location at which the finger of the user leaves the display is in the hotspot of the zoom point. If yes, it may indicate that the location at which the finger of the user leaves the display is on the zoom point. The hotspot of the zoom point is an area, on the display, including the location of the zoom point.

Usually, in a tap-to-zoom process, duration from tapping the display to leaving the display by the finger of the user is about 100 ms to 300 ms, and does not exceed total duration of the smooth zoom process.

In some embodiments, the user may alternatively tap or leave the display by using a handwriting apparatus (for example, a stylus).

S707: The camera application of the electronic device 100 sends a zoom confirmation instruction to the hardware abstract layer.

For example, if the electronic device 100 determines that the location at which the finger of the user leaves the display is in the hotspot of the 5X zoom point, it indicates that the location at which the finger of the user leaves the display is on the 5X zoom point. Then, the camera application of the electronic device 100 may send the zoom confirmation instruction to the hardware abstract layer, where the zoom confirmation instruction indicates the hardware abstract layer to perform a second processing procedure.

S708: The hardware abstract layer of the electronic device 100 starts to perform the second processing procedure.

After receiving the zoom confirmation instruction, the hardware abstract layer of the electronic device 100 may perform the second processing procedure based on the received zoom value corresponding to the zoom point and the received zoom value corresponding to the zoom sequence that are sent by the camera application. A specific process of performing the second processing procedure is described in detail below, and is not described herein.

S709: The display of the electronic device 100 displays a zoomed image.

Specifically, after the hardware abstract layer of the electronic device 100 performs the first processing procedure and the second processing procedure, the display of the electronic device 100 may display a plurality of zoomed images. For example, when the zoom sequence is [1.1X 1.2X 1.3X ... 4.9X 5X], the display may sequentially display images at 1.1X, 1.2X, 1.3X, ..., 4.9X, and 5X.

S710: The camera application of the electronic device 100 sends a zoom cancellation instruction to the hardware abstract layer.

For example, if the electronic device 100 determines that the location at which the finger of the user leaves the display is not in the hotspot of the 5X zoom point, it indicates that the location at which the finger of the user leaves the display is not on the 5X zoom point. Then, the camera application of the electronic device 100 may send the zoom cancellation instruction to the hardware abstract layer, where the zoom cancellation instruction indicates the hardware abstract layer to stop performing the first processing procedure and the second processing procedure.

S711: The hardware abstract layer of the electronic device 100 stops performing the first processing procedure and the second processing procedure.

After receiving the zoom cancellation instruction, the hardware abstract layer of the electronic device 100 may stop performing the first processing procedure and the second processing procedure. A specific process of performing the first processing procedure and the second processing procedure is described in detail below, and is not described herein.

It should be noted that the foregoing method for implementing smooth FOV center transition by the electronic device 100 in the tap-to-zoom scenario is described by using only an example of switching from the common camera to the long-focus camera. The foregoing method is further applicable to switching between other cameras, for example, switching from the common camera to the wide-angle camera. This is not limited in this embodiment of this application.

The following describes in detail the specific process of performing the first processing procedure and the second processing procedure by the hardware abstract layer of the electronic device 100 in the tap-to-zoom scenario.

In this embodiment of this application, the first processing procedure and the second processing procedure may be collectively referred to as a smooth zoom processing process. The specific process is as follows:

(1) Increase the zoom ratio

An example in which the current zoom point is a 1X zoom point, the target zoom point is a 5X zoom point, and the user performs tap-to-zoom from the 1X zoom point to the 5X zoom point (in other words, the user performs tap-to-switch from the common camera to the long-focus camera) is used for description.

As shown in Table 1, when the current zoom point is the 1X zoom point, only the common camera is running. In this case, an image (for example, the preview image shown in FIG. 4A) displayed on the display is from the common camera.

When the electronic device 100 detects that the user taps the 5X zoom point, the camera application may send, to the hardware abstract layer, a zoom value corresponding to the 5X zoom point. After receiving the zoom value corresponding to the 5X zoom point, the hardware abstract layer may determine, based on the zoom value, that a camera ID (Identifier) corresponding to the zoom value indicates the long-focus camera, and start to enable the long-focus camera. The common camera is still running. In this case, an image (for example, the preview image shown in FIG. 4A) displayed on the display is still from the common camera.

When sending, to the hardware abstract layer, the zoom value corresponding to the 5X zoom point, the camera application further sequentially sends, to the hardware abstract layer, a zoom value corresponding to each zoom ratio in a zoom sequence. For example, the zoom sequence is [1.1X 1.2X 1.3X ... 4.9X 5X]. In a process of sending a 1.1X zoom value to a 3X zoom value, the common camera is still running, but the long-focus camera is in a startup process and does not start to run. In this process, center cropping may be performed on the image captured by the common camera. In this case, an image (for example, the preview image shown in FIG. 4B) displayed on the display is still from the common camera.

In a process in which the camera application sends a 3.1X zoom value to a 4.9X zoom value, the common camera is still running, and the long-focus camera starts to run, in other words, the long-focus camera also starts to capture an image. Based on the image captured by the common camera and the image captured by the long-focus camera, the hardware abstract layer starts to execute an FOV center offset algorithm, and gradually moves an FOV center of the image captured by the common camera towards an FOV center of the long-focus camera. In this process, an image (for example, the preview image shown in FIG. 4C) displayed on the display is still from the common camera.

When the camera application sends the 5X zoom value to the hardware abstract layer, the common camera stops running (in other words, is disabled), the long-focus camera is still running, and an image (for example, the preview image shown in FIG. 4D) displayed on the display is from the long-focus camera. In this case, the camera application sends all zoom values corresponding to zoom ratios in the zoom sequence.

It can be learned from FIG. 4A to FIG. 4H that, the electronic device 100 may execute the FOV center offset algorithm and crop the image captured by the common camera, so that an FOV center of an image displayed on the display smoothly transits from an FOV center of the common camera to the FOV center of the long-focus camera. This implements smooth zoom.

Table 1

| Zoom ratio (sequentially delivering a zoom value corresponding to the zoom ratio to the HAL) | Camera running status | Camera from which a preview image displayed on the display comes |
|---|---|---|
| 1X | Only the common camera is running | Common camera |
| 5X | The common camera is running The long-focus camera starts up | Common camera |
| 1. 1X, 1.2X, ..., and 3X | The common camera is running The long-focus camera is in a startup process | Common camera |
| 3.1X, 3.2X, ..., and 4.9X | The common camera is running | Common camera |

(continued)

| Zoom ratio (sequentially delivering a zoom value corresponding to the zoom ratio to the HAL) | Camera running status | Camera from which a preview image displayed on the display comes |
|---|---|---|
| | The long-focus camera is running | |
| 5X | Only the long-focus camera is running | Long-focus camera |

(2) Reduce the zoom ratio

An example in which the current zoom point is a 1X zoom point, the target zoom point is a 0.4X zoom point, and the user performs tap-to-zoom from the 1X zoom point to the 0.4X zoom point (in other words, the user performs tap-to-switch from the common camera to the wide-angle camera) is used for description.

As shown in Table 2, when the current zoom point is the 1X zoom point, only the common camera is running. In this case, an image (for example, the preview image shown in FIG. 5A) displayed on the display is from the common camera.

When the electronic device 100 detects that the user taps the 0.4X zoom point, the camera application may send, to the hardware abstract layer, a zoom value corresponding to the 0.4X zoom point. After receiving the zoom value corresponding to the 0.4X zoom point, the hardware abstract layer may determine, based on the zoom value, that a camera ID (Identifier) corresponding to the zoom value indicates the wide-angle camera, and start to enable the wide-angle camera. The common camera is still running. In this case, an image (for example, the preview image shown in FIG. 5A) displayed on the display is still from the common camera.

When sending, to the hardware abstract layer, the zoom value corresponding to the 0.4X zoom point, the camera application further sequentially sends, to the hardware abstract layer, a zoom value corresponding to each zoom ratio in a zoom sequence. For example, the zoom sequence is [0.9X 0.8X ... 0.5X 0.4X]. When sending a 0.9X zoom value, the common camera is still running, but the wide-angle camera is in a startup process and does not start to run. In this process, center cropping may be performed on the image captured by the common camera. In this case, an image (for example, the preview image shown in FIG. 5B) displayed on the display is still from the common camera.

In a process in which the camera application sends a 0.8X zoom value to a 0.5X zoom value, the common camera is still running, and the wide-angle camera starts to run, in other words, the wide-angle camera also starts to capture an image. Based on the image captured by the common camera and the image captured by the wide-angle camera, the hardware abstract layer starts to execute an FOV center offset algorithm, and gradually moves an FOV center of the image captured by the common camera towards an FOV center of the wide-angle camera. In this process, an image (for example, the preview image shown in FIG. 5C) displayed on the display is still from the common camera.

When the camera application sends the 0.5X zoom value to the hardware abstract layer, the common camera stops running (in other words, is disabled), the wide-angle camera is still running, and an image (for example, the preview image shown in FIG. 5D) displayed on the display is from the wide-angle camera. In this case, the camera application sends zoom values corresponding to all zoom ratios in the zoom sequence.

It can be learned from FIG. 5A to FIG. 5H that, the electronic device 100 may execute the FOV center offset algorithm and crop the image captured by the common camera, so that an FOV center of an image displayed on the display smoothly transits from an FOV center of the common camera to the FOV center of the wide-angle camera. This implements smooth zoom.

**Table 2**

| Zoom ratio (sequentially delivering a zoom value corresponding to the zoom ratio to the HAL) | Camera running status | Camera from which a preview image displayed on the display comes |
|---|---|---|
| 1X | Only the common camera is running | Common camera |
| 0.4X | The common camera is running<br>The wide-angle camera starts up | Common camera |
| 0.9X | The common camera is running<br>The wide-angle camera is in a startup process | Common camera |
| 0.8X, 0.7X, 0.6X, and 0.5X | The common camera is running<br>The wide-angle camera is running | Common camera |

(continued)

| Zoom ratio (sequentially delivering a zoom value corresponding to the zoom ratio to the HAL) | Camera running status | Camera from which a preview image displayed on the display comes |
|---|---|---|
| 0.4X | Only the wide-angle camera is running | Wide-angle camera |

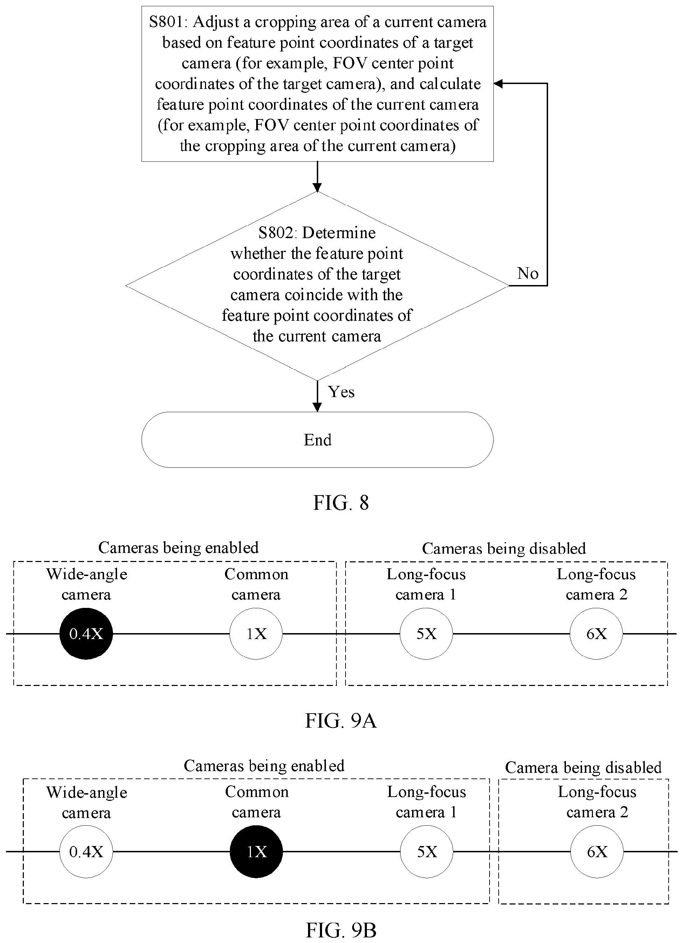

The following describes a specific execution process of the FOV center offset algorithm. FIG. 8 shows an example of the specific execution process of the FOV center offset algorithm. A target camera is a camera to be switched from a current camera. The process includes the following steps.

S801: The hardware abstract layer of the electronic device 100 adjusts a cropping area (including a location and a size of the cropping area) of a current camera based on feature point coordinates of a target camera (for example, FOV center point coordinates of the target camera), and calculates feature point coordinates of the current camera (for example, FOV center point coordinates of the cropping area of the current camera).

(1) Increase the zoom ratio

For example, the current camera is the common camera, and the target camera is the long-focus camera. When both the common camera and the long-focus camera are in a running state, the hardware abstract layer of the electronic device 100 may adjust a cropping area of the common camera (for example, adjusts the cropping area from an area in which the image 2 in FIG. 4F is located to an area in which the image 3 in FIG. 4G is located) based on feature point coordinates of the long-focus camera (for example, the FOV center point coordinates O4 of the long-focus camera shown in FIG. 4G), and calculate feature point coordinates of the common camera (for example, the FOV center point coordinates O3 of the common camera shown in FIG. 4G) based on the cropping area.

(2) Reduce the zoom ratio

For example, the current camera is the common camera, and the target camera is the wide-angle camera. When both the common camera and the wide-angle camera are in a running state, the hardware abstract layer of the electronic device 100 may adjust a cropping area of the common camera (for example, adjusts the cropping area from an area in which the image 2' in FIG. 5F is located to an area in which the image 3' in FIG. 5G is located) based on feature point coordinates of the wide-angle camera (for example, the FOV center point coordinates O4' of the wide-angle camera shown in FIG. 5G), and calculate feature point coordinates of the common camera (for example, the FOV center point coordinates O3' of the common camera shown in FIG. 5G) based on the cropping area.

S802: The hardware abstract layer of the electronic device 100 determines whether the feature point coordinates of the target camera coincide with the feature point coordinates of the current camera.

Specifically, after step S801 is performed, the hardware abstract layer of the electronic device 100 may determine whether the feature point coordinates of the target camera coincide with the feature point coordinates of the current camera that are calculated based on the cropping area of the current camera. If yes, execution of the FOV center offset algorithm ends. If no, step S801 and step S802 continue to be sequentially performed until the feature point coordinates of the target camera coincide with the feature point coordinates of the current camera. In other words, the cropping area of the current camera may be adjusted for a plurality of times, and the feature point coordinates of the current camera may be calculated for a plurality of times, to enable the feature point coordinates of the current camera to gradually approach and coincide with the feature point coordinates of the target camera, so that an FOV center of an image displayed on the display can smoothly transit from an FOV center of the common camera to an FOV center of the wide-angle camera.

(1) Increase the zoom ratio

For example, the current camera is the common camera, and the target camera is the long-focus camera. It is assumed that the zoom ratio is gradually increased in a change trend of 3.1X, 3.2X, 3.3X, ..., 4.9X, and 5X. In this case, the hardware abstract layer of the electronic device 100 may sequentially adjust the cropping area of the current camera at the 3.1X, 3.2X, 3.3X, ..., 4.9X, and 5X zoom ratios, and sequentially calculate feature point coordinates of the current camera, so that FOV center point coordinates of the common camera gradually move to FOV center point coordinates of the long-focus camera. In this way, an FOV center of a preview image does not jump in a zoom process.

(2) Reduce the zoom ratio

For example, the current camera is the common camera, and the target camera is the wide-angle camera. It is assumed that the zoom ratio is gradually decreased in a change trend of 0.8X, 0.7X, 0.6X, 0.5X, and 0.4X. In this case, the hardware abstract layer of the electronic device 100 may sequentially adjust the cropping area of the current camera at the 0.8X, 0.7X, 0.6X, 0.5X, and 0.4X zoom ratios, and sequentially calculate feature point coordinates of the current camera, so that FOV center point coordinates of the common camera gradually move to FOV center point coordinates of the wide-angle camera. In this way, an FOV center of a preview image does not jump in a zoom process.

It should be noted that, in FIG. 8, the specific execution process of the FOV center offset algorithm is described in detail by using only an example of switching from the common camera to the long-focus camera and an example of switching from the common camera to the wide-angle camera. This is not limited thereto. The FOV algorithm is also applicable to switching between other cameras. This is not limited in this embodiment of this application.

In the foregoing embodiments, the electronic device 100 enables only one camera by default, and enables another camera only in the tap-to-zoom scenario, so that smooth FOV center transition can be implemented.

In this embodiment of this application, the electronic device 100 may alternatively enable, by default, a current camera and a camera whose focal length is adjacent (or may be referred to as a camera whose optical zoom ratio is adjacent) to that of the current camera. In a plurality of scenarios such as tap-to-zoom, dual-finger zoom, and zoom by dragging a zoom bar, only a camera corresponding to a target zoom point and a camera whose focal length is adjacent to that of the camera are enabled. In this way, smooth FOV center transition can also be implemented, and time for enabling the camera in a zoom process can be reduced. The following provides detailed descriptions.

It is assumed that the electronic device 100 has four cameras: a wide-angle camera, a common camera, a long-focus camera 1, and a long-focus camera 2. FIG. 9A to FIG. 9D show examples of enabled/disabled states of the four cameras. A camera represented by a black solid circle is a camera from which a preview image displayed on the display of the electronic device 100 comes.

It is assumed that an optical zoom ratio of the wide-angle camera is 0.4X, an optical zoom ratio of the common camera is 1X, an optical zoom ratio of the long-focus camera 1 is 5X, and an optical zoom ratio of the long-focus camera 2 is 6X. It can be easily learned from FIG. 9A to FIG. 9D that optical zoom ratios of the four cameras sequentially increase, to be specific, the optical zoom ratio of the wide-angle camera<the optical zoom ratio of the common camera<the optical zoom ratio of the long-focus camera 1<the optical zoom ratio of the long-focus camera 1. It is easy to understand that, from a perspective of an optical zoom ratio of each camera, the wide-angle camera is adjacent to only the common camera, the common camera is adjacent to the wide-angle camera and the long-focus camera 1, the long-focus camera 1 is adjacent to the common camera and the long-focus camera 2, and the long-focus camera 2 is adjacent to only the long-focus camera 2.

It is assumed that the electronic device 100 enables the wide-angle camera by default. As shown in FIG. 9A, after detecting an operation of opening a camera application by the user, the electronic device 100 opens the camera application in response to the operation, and a preview image is an image captured by the wide-angle camera. In addition, because the wide-angle camera is adjacent to the common camera, the electronic device 100 starts to enable the common camera, so that the common camera enters a running state. When the common camera has entered the running state, if the electronic device 100 detects an operation of switching from the wide-angle camera to the common camera by the user, in response to the operation, the electronic device 100 may directly execute an FOV center offset algorithm based on an image captured by the common camera and the image captured by the wide-angle camera, so that an FOV center of the wide-angle camera smoothly transits to an FOV center of the common camera. This avoids an FOV center jump, and implements smooth zoom.

As shown in FIG. 9B, after a smooth zoom process ends, a preview image is the image captured by the common camera. In this case, because the common camera is adjacent to the wide-angle camera and the long-focus camera 1, the electronic device 100 still keeps the wide-angle camera running, and starts to enable the long-focus camera 1, so that the long-focus camera 1 enters a running state. When the long-focus camera 1 has entered the running state, if the electronic device 100 detects an operation of switching from the common camera to the long-focus camera 1 by the user, in response to the operation, the electronic device 100 may directly execute the FOV center offset algorithm based on the image captured by the common camera and an image captured by the long-focus camera 1, so that the FOV center of the common camera smoothly transits to an FOV center of the long-focus camera 1. This avoids an FOV center jump, and implements smooth zoom.

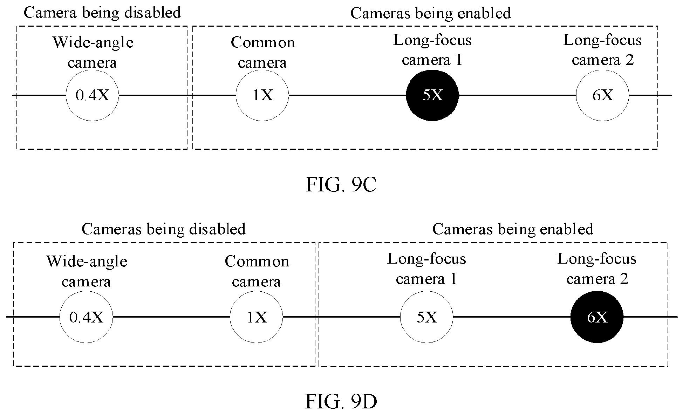

As shown in FIG. 9C, after a smooth zoom process ends, a preview image is the image captured by the long-focus camera 1. In this case, because the long-focus camera 1 is adjacent to the common camera and the long-focus camera 2, and is not adjacent to the wide-angle camera, the electronic device 100 starts to disable the wide-angle camera, still keeps the common camera running, and starts to enable the long-focus camera 2, so that the long-focus camera 2 enters a running state. When the long-focus camera 2 has entered the running state, if the electronic device 100 detects an operation of switching from the long-focus camera 1 to the long-focus camera 2 by the user, in response to the operation, the electronic device 100 may directly execute the FOV center offset algorithm based on the image captured by the long-focus camera 1 and an image captured by the long-focus camera 2, so that the FOV center of the long-focus camera 1 smoothly transits to an FOV center of the long-focus camera 2. This avoids an FOV center jump, and implements smooth zoom.

As shown in FIG. 9D, after a smooth zoom process ends, a preview image is the image captured by the long-focus camera 2. In this case, because the long-focus camera 2 is adjacent to the long-focus camera 1 and is not adjacent to the common camera, the electronic device 100 starts to disable the common camera, and still keeps the long-focus camera 1 running.

It can be learned that, a difference from enabling only one camera by default in the tap-to-zoom scenario lies in: In this embodiment of this application, the FOV center offset algorithm may be directly executed in a scenario of detecting that the user requires zoom (for example, in the plurality of scenarios such as tap-to-zoom, dual-finger zoom, and zoom by dragging a zoom bar), and the FOV center offset algorithm does not need to be executed after the camera corresponding to the target zoom point runs. In this way, the time for enabling the camera in the zoom process is reduced while the smooth zoom is implemented.

It should be noted that the foregoing describes FIG. 9A to FIG. 9D by using only an example in which the electronic device 100 enables the wide-angle camera by default. This is not limited thereto. A camera enabled by the electronic device 100 by default may alternatively be another camera. For example, the electronic device 100 may alternatively enable the common camera by default. When it is detected that the user switches from the common camera to the wide-angle camera, the enabled/disabled states of the cameras may be switched from FIG. 9B to FIG. 9A. When it is detected that the user switches from the common camera to the long-focus camera 1, the enabled/disabled states of the cameras may be switched from FIG. 9B to FIG. 9C.

It is easy to understand that this embodiment of this application is also applicable to a scenario in which the user directly performs tap-to-zoom to switch from the current camera to a camera that is not adjacent to the current camera. For example, when a zoom ratio is increased, if the electronic device 100 detects an operation of directly performing tap-to-zoom to switch from the wide-angle camera to the long-focus camera 2 by the user, in response to the operation, the electronic device 100 may sequentially enable or disable corresponding cameras in FIG. 9A, FIG. 9B, FIG. 9C, and FIG. 9D, and sequentially execute the FOV center offset algorithm in smooth zoom processes. For another example, when a zoom ratio is decreased, if the electronic device 100 detects an operation of directly performing tap-to-zoom to switch from the long-focus camera 2 to the wide-angle camera by the user, in response to the operation, the electronic device 100 may sequentially enable or disable corresponding cameras in FIG. 9D, FIG. 9C, FIG. 9B, and FIG. 9A, and sequentially execute the FOV center offset algorithm in smooth zoom processes.

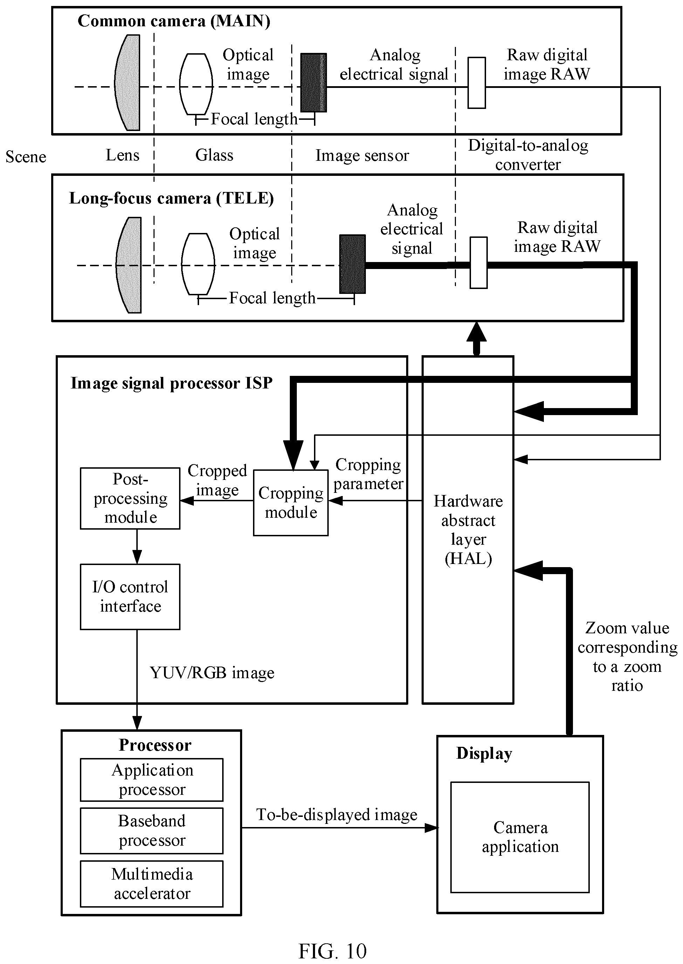

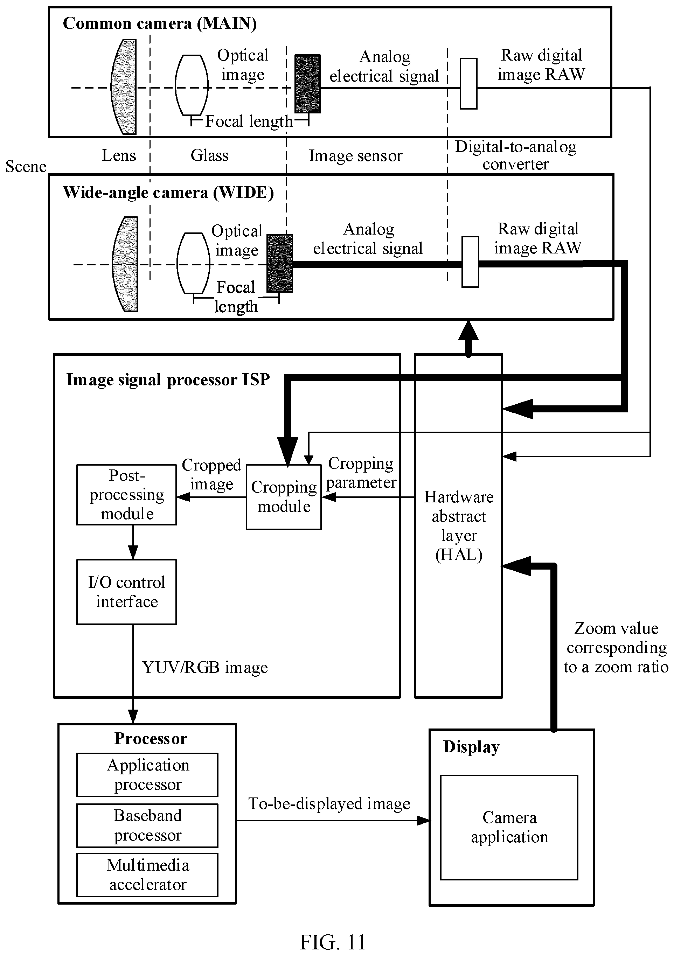

The following describes in detail a specific implementation of an FOV center smooth transition process from a perspective of software and hardware collaboration of the electronic device 100 with reference to FIG. 10 and FIG. 11.

As shown in FIG. 10 and FIG. 11, a camera is configured to capture an image. When reflected light of a scene passes through a lens and is refracted by glasses, the reflected light is converged on an image sensor. The image sensor converts an optical image into an analog electrical signal, and then outputs, through a digital-to-analog converter, a raw digital image captured by the camera.

The hardware abstract layer is configured to: receive a zoom value that corresponds to a zoom ratio and that is reported by the camera application, enable a target camera (for example, the long-focus camera or the wide-angle camera) corresponding to the zoom ratio, enable execution of the FOV center offset algorithm, and the like. Specifically, after receiving the zoom value that corresponds to the zoom ratio and that is reported by the camera application, the hardware abstract layer may determine and enable the target camera corresponding to the zoom value. Then, the hardware abstract layer may execute the FOV center offset algorithm based on an image captured by a current camera (for example, the common camera) and an image captured by the target camera (for example, the long-focus camera or the wide-angle camera), to obtain a cropping parameter, and send the cropping parameter to a cropping module of the ISP. The cropping parameter may include a location (for example, FOV center point coordinates) and a size (a width and a height) of a cropping area.

The ISP is configured to convert data from the camera into an image in a standard format, for example, YUV or RGB. Specifically, the ISP may use the cropping module to crop, based on the received cropping parameter, the image captured by the camera, then perform post-processing on a cropped image, for example, perform operations such as black level correction, lens shadow correction, defective pixel compensation, and color interpolation, and then send a YUV/RGB image to the processor for processing through an I/O control interface.

The processor includes an application processor, a baseband processor, a multimedia processor, and the like, and may run various image processing algorithms and control a peripheral device. In a preview scenario, an image in a format, for example, YUV or RGB, obtained by the ISP may be directly sent to the display for display. In a photographing or video recording scenario, a photo or video may be saved in the memory.

The display may monitor, by using a UI, a user operation used to adjust a preview image of each area on the display, and report the detected user operation to the hardware abstract layer. The user operation may include but is not limited to a touch operation that is detected by the electronic device 100 in the preview box and that is performed on a target object in the foregoing UI embodiments.

As shown in FIG. 10, the following describes a specific implementation of increasing a zoom ratio (an example of switching from the common camera to the long-focus camera is used).

In a preview scenario, the display displays a preview interface, a preview box in the preview interface is used to display an image captured by the common camera, and a zoom ratio displayed in the preview interface is 1X.

When only the common camera is enabled by default, the display detects an operation of increasing the zoom ratio to 5X by the user (for example, an operation of tapping a zoom point 5X by the user), and sends a zoom value corresponding to the zoom ratio selected by the user to the hardware abstract layer. The hardware abstract layer may determine that a camera corresponding to the zoom point 5X is the long-focus camera. Then, the hardware abstract layer may enable the long-focus camera. In a startup process of the long-focus camera, in other words, before the long-focus camera starts to run, the ISP may perform center cropping on the image captured by the common camera based on a cropping parameter calculated by the hardware abstract layer. After the long-focus camera starts to run, the hardware abstract layer may execute the FOV center offset algorithm based on the image captured by the common camera and an image captured by the long-focus camera to obtain a cropping parameter, and send the cropping parameter to the cropping module of the ISP. The cropping module of the ISP may perform, based on the cropping parameter, eccentric cropping on the image captured by the common camera. Then, the ISP may further perform post-processing on a cropped image, and send the image to the processor to generate a to-be-displayed image. Then, the processor may send the to-be-displayed image to the display, to indicate the display to display the to-be-displayed image in the preview box.

When the common camera is enabled by default, and cameras (for example, the long-focus camera and the wide-angle camera) adjacent to the common camera are enabled, the display detects an operation of increasing the zoom ratio to 5X by the user (for example, an operation of tapping a zoom point 5X by the user), and sends a zoom value corresponding to the zoom ratio selected by the user to the hardware abstract layer. The hardware abstract layer may determine that a camera corresponding to the zoom point 5X is the long-focus camera. Then, because the long-focus camera has been enabled and run in advance, the hardware abstract layer may directly execute the FOV center offset algorithm based on the image captured by the common camera and an image captured by the long-focus camera to obtain a cropping parameter, and send the cropping parameter to the cropping module of the ISP. The cropping module of the ISP may perform, based on the cropping parameter, eccentric cropping on the image captured by the common camera. Then, the ISP may further perform post-processing on a cropped image, and send the image to the processor to generate a to-be-displayed image. Then, the processor may send the to-be-displayed image to the display, to indicate the display to display the to-be-displayed image in the preview box.

It is easy to understand that, in a process of increasing the zoom ratio, the electronic device 100 may crop, through collaboration of the hardware abstract layer and the ISP, the image captured by the common camera, to gradually reduce a preview field of view and gradually change an FOV center of a display image.

As shown in FIG. 11, the following describes a specific implementation of decreasing a zoom ratio (an example of switching from the common camera to the wide-angle camera is used).

In a preview scenario, the display displays a preview interface, a preview box in the preview interface is used to display an image captured by the common camera, and a zoom ratio displayed in the preview interface is 1X.

When only the common camera is enabled by default, the display detects an operation of decreasing the zoom ratio to 0.4X by the user (for example, an operation of tapping a zoom point 0.4X by the user), and sends a zoom value corresponding to the zoom ratio selected by the user to the hardware abstract layer. The hardware abstract layer may determine that a camera corresponding to the zoom point 0.4X is the wide-angle camera. Then, the hardware abstract layer may enable the wide-angle camera. In a startup process of the wide-angle camera, in other words, before the wide-angle camera starts to run, the ISP may perform center cropping on the image captured by the common camera based on a cropping parameter calculated by the hardware abstract layer. After the wide-angle camera starts to run, the hardware abstract layer may execute the FOV center offset algorithm based on the image captured by the common camera and an image captured by the wide-angle camera to obtain a cropping parameter, and send the cropping parameter to the cropping module of the ISP. The cropping module of the ISP may perform, based on the cropping parameter, eccentric cropping on the image captured by the common camera. Then, the ISP may further perform post-processing on a cropped image, and send the image to the processor to generate a to-be-displayed image. Then, the processor may send the to-be-displayed image to the display, to indicate the display to display the to-be-displayed image in the preview box.

When the common camera is enabled by default, and cameras (for example, the long-focus camera and the wide-angle camera) adjacent to the common camera are enabled, the display detects an operation of decreasing the zoom ratio to 0.4X by the user (for example, an operation of tapping a zoom point 0.4X by the user), and sends a zoom value corresponding to the zoom ratio selected by the user to the hardware abstract layer. The hardware abstract layer may determine that a camera corresponding to the zoom point 0.4X is the wide-angle camera. Then, because the wide-angle camera has been enabled and run in advance, the hardware abstract layer may directly execute the FOV center offset algorithm based on the image captured by the common camera and an image captured by the wide-angle camera to obtain a cropping parameter, and send the cropping parameter to the cropping module of the ISP. The cropping module of the ISP may perform, based on the cropping parameter, eccentric cropping on the image captured by the common camera. Then, the ISP may further perform post-processing on a cropped image, and send the image to the processor to generate a to-be-displayed image. Then, the processor may send the to-be-displayed image to the display, to indicate the display to display the to-be-displayed image in the preview box.

It is easy to understand that, in a process of decreasing the zoom ratio, the electronic device 100 may crop, through collaboration of the hardware abstract layer and the ISP, the image captured by the common camera, to gradually expand a preview field of view and gradually change an FOV center of a display image.

In a photographing scenario, different from the foregoing two preview scenarios, the display may alternatively detect a photographing operation of the user, and in response to the operation, the electronic device 100 may save an image displayed in a preview box as a photo. Specifically, after entering a photographing preview interface, in addition to detecting an operation of increasing/decreasing a zoom ratio by the user, the display can further detect a touch operation of the user on a photographing control. In response to the operation, the electronic device 100 may save an image sent by the ISP to the preview box of the display when the touch operation is detected, to be specific, the ISP may further encode and compress obtained YUV-format data into a JPEG-format photo, and then the processor saves the photo into the memory.

In a video recording scenario, different from the foregoing two preview scenarios, the electronic device 100 may further save images in a preview box, and specifically save the images as a video file. Specifically, after entering a photographing preview interface, in addition to detecting an operation of increasing/decreasing a zoom ratio by the user, the display can further detect two touch operations of the user on a video recording control. In response to the two touch operations, the electronic device 100 may save image frames output in a period of time between the two touch operations, that is, a video generated in a video recording mode, and the processor then saves the generated video into the memory.

Based on the electronic device 100 and the UI embodiments described above, the following describes an overall procedure of a photographing method provided in embodiments of this application.

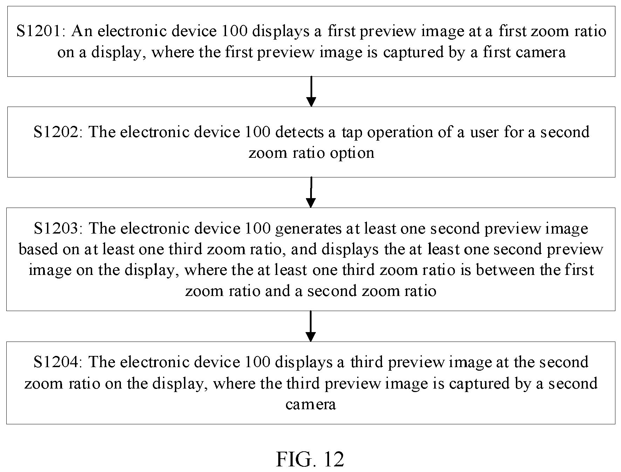

As shown in FIG. 12, the photographing method may be applied to an electronic device 100 including a display and a plurality of cameras. The plurality of cameras may include a first camera and a second camera. Specific steps for performing the photographing method are as follows:

S1201: The electronic device 100 displays a first preview image at a first zoom ratio on the display, where the first preview image is captured by the first camera.

Specifically, the electronic device 100 may detect an operation of opening a "camera" application by a user, for example, the operation of tapping the camera icon 215D on the home screen shown in FIG. 3A. In response to the operation, the electronic device 100 may open the "camera" application, and display the first preview image at the first zoom ratio on the display, where the first preview image is captured by the first camera.

The first camera may be a common camera, the first zoom ratio may be an optical zoom ratio of the common camera or a zoom ratio in a digital zoom ratio range of the common camera, and the first preview image may be the image in the preview box shown in FIG. 4A or FIG. 5A.

S1202: The electronic device 100 detects a tap operation of the user for a second zoom ratio option.

The second zoom ratio option may also be referred to as a target zoom point, for example, a target zoom point 5X. The tap operation may include: an operation of first touching the second zoom ratio option and then leaving the second zoom ratio option by a finger of the user or a handwriting apparatus.

S1203: The electronic device 100 generates at least one second preview image based on at least one third zoom ratio, and displays the at least one second preview image on the display, where the at least one third zoom ratio is between the first zoom ratio and a second zoom ratio.

The third zoom ratio may be one or more zoom ratios in a zoom sequence mentioned in the foregoing embodiment, and the second preview image may be a preview image at the third zoom ratio in a smooth zoom process. The second zoom ratio may be an optical zoom ratio of the second camera. The second camera may be a long-focus camera or a wide-angle camera.

For example, when the zoom ratio is increased, the second zoom ratio may be an optical zoom ratio of the long-focus camera, the third zoom ratio may be 3X, and the corresponding second preview image may be the image in the preview box shown in FIG. 4B. Alternatively, the third zoom ratio may be 3.1X, and the corresponding second preview image may be the image in the preview box shown in FIG. 4C.

For example, when the zoom ratio is decreased, the second zoom ratio may be an optical zoom ratio of the wide-angle camera, the third zoom ratio may be 0.9X, and the corresponding second preview image may be the image in the preview box shown in FIG. 5B. Alternatively, the third zoom ratio may be 0.8X, and the corresponding second preview image may be the image in the preview box shown in FIG. 5C.

S1204: The electronic device 100 displays a third preview image at the second zoom ratio on the display, where the third preview image is captured by the second camera.

For example, when the zoom ratio is increased, the second camera may be the long-focus camera, and the third preview image may be the image in the preview box shown in FIG. 4D.

For example, when the zoom ratio is decreased, the second camera may be the wide-angle camera, and the third preview image may be the image in the preview box shown in FIG. 5D.

For content that is not mentioned in the foregoing overall method procedure, refer to related content in the foregoing embodiments. Details are not described herein again.

The foregoing embodiments are merely intended to describe the technical solutions of this disclosure.

## Claims

1. A photographing method, applied to an electronic device comprising a display and a plurality of cameras with different focal lengths, wherein the plurality of cameras comprise a first camera and a second camera, and the method comprises:

   displaying (S1201), by the electronic device a preview image at a first zoom ratio on the display, wherein the preview image at the first zoom ratio is captured by the first camera, and a Field of View, FOV, center of the preview image at the first zoom ratio coincides with an FOV. center of the first camera;
   detecting (S1202), by the electronic device, a display tap operation of a user for a second zoom ratio option;
   starting to enable, by the electronic device, the second camera in response to the display tap operation;
   gradually changing, by the electronic device, an FOV, the preview image during a process of enabling the second camera to running status, wherein the FOV of the preview image during the process coincides with the FOV center of the preview image at the first zoom ratio, and the preview image during the process is obtained by cropping image captured by the first camera;
   continuing gradually changing, by the electronic device, the FOV of the preview image after the second camera enters running status, and moving the FOV center of the preview image towards an FOV. center of the second camera;
   disabling, by the electronic device, the first camera, and displaying (S1204) the preview image at a second zoom ratio on the display, wherein the preview image at the second zoom ratio is captured by the second camera, and the FOV center of the preview image at the second zoom ratio coincides with the FOV center of the second camera.

2. The method according to claim 1, wherein the display tap operation comprises: an operation of first touching the second zoom ratio option and then leaving the second zoom ratio option by a finger of the user or a handwriting apparatus.

3. The method according to claim 1 or 2, wherein the second zoom ratio is greater than the first zoom ratio, and an optical zoom ratio of the second camera is greater than an optical zoom ratio of the first camera, and the gradually changing, by the electronic device, the FOV of the preview image, specifically comprising:
   gradually reducing, by the electronic device, the FOV of the preview image.

4. The method according to claim 1 or 2, wherein the second zoom ratio is less than the first zoom ratio, and an optical zoom ratio of the second camera is less than an optical zoom ratio of the first camera, and the gradually changing, by the electronic device, the FOV of the preview image, specifically comprising:
   gradually expanding, by the electronic device, the FOV of preview image.

5. The method according to any one of claims 1 to 4, wherein the moving of the FOV center of the preview image towards the FOV center of the second camera specifically happens a period of time after the second camera starts to run.

6. The method according to any one of claims 1 to 5, wherein a method for determining zoom value corresponding to the preview image the process of gradually changing the FOV of the preview image is as follows:

$$\mathrm{zoomValue} = 2^{\frac{S}{T}*t*n},$$

   wherein
   S is a distance between a first zoom ratio option and the second zoom ratio option on the display, and n is a positive integer less than the quantity N of second preview images.

7. An electronic device, comprising a display, a plurality of cameras with different focal lengths, a memory, a processor coupled to the memory, a plurality of applications, and one or more programs, wherein optical centers of the plurality of cameras do not coincide with each other, the plurality of cameras comprise a first camera and a second camera, the first camera and the second camera are two cameras with adjacent focal lengths in the plurality of cameras, and when the processor runs the one or more programs, the electronic device performs the method according to any one of claims 1 to 6.

8. A computer storage medium, wherein the computer storage medium stores a computer program, the computer program comprises program instructions, and when the program instructions are run on an electronic device comprising a display and a plurality of cameras with different focal lengths, the electronic device performs the method according to any one of claims 1 to 6.

**Patentansprüche**

1. Fotografierverfahren, das auf eine elektronische Vorrichtung angewendet wird, die eine Anzeige und eine Vielzahl von Kameras mit unterschiedlichen Brennweiten umfasst,

wobei die Vielzahl von Kameras eine erste Kamera und eine zweite Kamera umfasst und das Verfahren umfasst:
Anzeigen (S1201), durch die elektronische Vorrichtung, eines Vorschaubilds mit einem ersten Zoomverhältnis auf der Anzeige, wobei das Vorschaubild mit dem ersten Zoomverhältnis durch die erste Kamera aufgenommen wird und ein Sichtfeld(FOV)-Mittelpunkt des Vorschaubilds mit dem ersten Zoomverhältnis mit einem FOV-Mittelpunkt der ersten Kamera übereinstimmt;
Erkennen (S1202), durch die elektronische Vorrichtung, eines Anzeige-Tippvorgangs eines Benutzers für eine zweite Zoomverhältnisoption;
Beginnen einer Aktivierung, durch die elektronische Vorrichtung, der zweiten Kamera als Reaktion auf den Anzeige-Tippvorgang;
schrittweises Ändern, durch die elektronische Vorrichtung, eines FOV des Vorschaubilds während eines Prozesses zum Aktivieren des Betriebszustands der zweiten Kamera, wobei das FOV des Vorschaubilds während des Prozesses mit dem FOV-Mittelpunkt des Vorschaubilds mit dem ersten Zoomverhältnis übereinstimmt und das Vorschaubild während des Prozesses durch Zuschneiden des Bilds, das durch die erste Kamera aufgenommen wird, erhalten wird;
Fortsetzen des schrittweisen Änderns, durch die elektronische Vorrichtung, des FOV des Vorschaubilds, nachdem die zweite Kamera in den Betriebszustand übergegangen ist, und Bewegen des FOV-Mittelpunkts des Vorschaubilds zu einem FOV-Mittelpunkt der zweiten Kamera hin;
Deaktivieren, durch die elektronische Vorrichtung, der ersten Kamera und Anzeigen (S1204) des Vorschaubilds mit einem zweiten Zoomverhältnis auf der Anzeige, wobei das Vorschaubild mit dem zweiten Zoomverhältnis durch die zweite Kamera aufgenommen wird, und der FOV-Mittelpunkt des Vorschaubilds mit dem zweiten Zoomverhältnis mit dem FOV-Mittelpunkt der zweiten Kamera übereinstimmt.

2. Verfahren nach Anspruch 1, wobei der Anzeige-Tippvorgang umfasst: einen Vorgang, bei dem zuerst die zweite Zoomverhältnisoption berührt und dann die zweite Zoomverhältnisoption mit einem Finger des Benutzers oder einem Handschriftgerät verlassen wird.

3. Verfahren nach Anspruch 1 oder 2, wobei das zweite Zoomverhältnis größer als das erste Zoomverhältnis ist, und ein optisches Zoomverhältnis der zweiten Kamera größer als ein optisches Zoomverhältnis der ersten Kamera ist, und das schrittweise Ändern, durch die elektronische Vorrichtung, des FOV des Vorschaubilds insbesondere umfasst: schrittweises Reduzieren, durch die elektronische Vorrichtung, des FOV des Vorschaubilds.

4. Verfahren nach Anspruch 1 oder 2, wobei das zweite Zoomverhältnis kleiner als das erste Zoomverhältnis ist, und ein optisches Zoomverhältnis der zweiten Kamera kleiner als ein optisches Zoomverhältnis der ersten Kamera ist, und das schrittweise Ändern, durch die elektronische Vorrichtung, des FOV des Vorschaubilds insbesondere umfasst: schrittweises Erweitern, durch die elektronische Vorrichtung, des FOV des Vorschaubilds.

5. Verfahren nach einem der Ansprüche 1 bis 4, wobei das Bewegen des FOV-Mittelpunkts des Vorschaubilds zu dem FOV-Mittelpunkt der zweiten Kamera hin insbesondere eine Zeitspanne nach dem Beginn eines Betriebs der zweiten Kamera erfolgt.

6. Verfahren nach einem der Ansprüche 1 bis 5, wobei ein Verfahren zum Bestimmen des Zoomwerts, der dem Vorschaubild entspricht, während des Prozesses des schrittweisen Änderns des FOV des Vorschaubilds wie folgt ist:

$$\text{Zoomwert} = 2^{\frac{S}{T}*t*n}, \text{ wobei}$$

S ein Abstand zwischen einer ersten Zoomverhältnisoption und der zweiten Zoomverhältnisoption auf der Anzeige ist und n eine positive Ganzzahl ist, die kleiner als die Anzahl N von zweiten Vorschaubildern ist.

7. Elektronische Vorrichtung, die eine Anzeige, eine Vielzahl von Kameras mit unterschiedlichen Brennweiten, einen Speicher, einen mit dem Speicher gekoppelten Prozessor, eine Vielzahl von Anwendungen und ein oder mehrere Programme umfasst, wobei optische Mittelpunkte der Vielzahl von Kameras nicht miteinander übereinstimmen, die Vielzahl von Kameras eine erste Kamera und eine zweite Kamera umfassen, die erste Kamera und die zweite Kamera zwei Kameras mit angrenzenden Brennweiten in der Vielzahl von Kameras sind, und wenn der Prozessor das eine oder die mehreren Programme ausführt, die elektronische Vorrichtung das Verfahren nach einem der Ansprüche 1 bis 6 durchführt.

8. Computerspeicherungsmedium, wobei das Computerspeicherungsmedium ein Computerprogramm speichert, das Computerprogramm Programmanweisungen umfasst, und wenn die Programmanweisungen auf einer elektronischen Vorrichtung, die eine Anzeige und eine Vielzahl von Kameras mit unterschiedlichen Brennweiten umfasst, ausgeführt werden, die elektronische Vorrichtung das Verfahren nach einem der Ansprüche 1 bis 6 durchführt.

## Revendications

1. Procédé de photographie, appliqué à un dispositif électronique comprenant un dispositif d'affichage et une pluralité de caméras avec des distances focales différentes, dans lequel la pluralité de caméras comprend une première caméra et une seconde caméra, et le procédé comprend :

l'affichage (S1201), par le dispositif électronique, d'une image de prévisualisation à un premier rapport de zoom sur le dispositif d'affichage, dans lequel l'image de prévisualisation au premier rapport de zoom est capturée par la première caméra, et un centre de champ de vision, FOV, de l'image de prévisualisation au premier rapport de zoom coïncide avec un centre FOV de la première caméra ;
la détection (S1202), par le dispositif électronique, d'une opération de tapotement de dispositif d'affichage d'un utilisateur pour une seconde option de rapport de zoom ;
le démarrage pour activer, par le dispositif électronique, la seconde caméra en réponse à l'opération de tapotement de dispositif d'affichage ;
la modification progressive, par le dispositif électronique, d'un FOV de l'image de prévisualisation au cours d'un processus d'activation du statut de fonctionnement de la seconde caméra, dans lequel le FOV de l'image de prévisualisation au cours du processus coïncide avec le centre FOV de l'image de prévisualisation au premier rapport de zoom, et l'image de prévisualisation au cours du processus est obtenue par recadrage de l'image capturée par la première caméra ;
la poursuite de la modification progressive, par le dispositif électronique, du FOV de l'image de prévisualisation après que la seconde caméra entre en état de marche, et le déplacement du centre de FOV de l'image de prévisualisation vers un centre de FOV de la seconde caméra ;
la désactivation, par le dispositif électronique, de la première caméra et
l'affichage (S1204) de l'image de prévisualisation à un second rapport de zoom sur le dispositif d'affichage, dans lequel l'image de prévisualisation au second rapport de zoom est capturée par la seconde caméra, et le centre de FOV de l'image de prévisualisation au second rapport de zoom coïncide avec le centre de FOV de la seconde caméra.

2. Procédé selon la revendication 1, dans lequel l'opération de tapotement de dispositif d'affichage comprend : une opération consistant à toucher en premier la seconde option de rapport de zoom, puis à quitter la seconde option de rapport de zoom par un doigt de l'utilisateur ou un appareil d'écriture manuscrite.

3. Procédé selon la revendication 1 ou 2, dans lequel le second rapport de zoom est supérieur au premier rapport de zoom, et

un rapport de zoom optique de la seconde caméra est supérieur à un rapport de zoom optique de la première caméra, et
la modification progressive, par le dispositif électronique, du FOV de l'image de prévisualisation, comprenant spécifiquement :
la réduction progressive, par le dispositif électronique, du FOV de l'image de prévisualisation.

4. Procédé selon la revendication 1 ou 2, dans lequel le second rapport de zoom est inférieur au premier rapport de zoom, et

un rapport de zoom optique de la seconde caméra est inférieur à un rapport de zoom optique de la première caméra, et
la modification progressive, par le dispositif électronique, du FOV de l'image de prévisualisation, comprenant spécifiquement :
l'élargissement progressif, par le dispositif électronique, du FOV de l'image de prévisualisation.

5. Procédé selon l'une quelconque des revendications 1 à 4, dans lequel le déplacement du centre de FOV de l'image de prévisualisation vers le centre de FOV de la seconde caméra se produit spécifiquement pendant une période de temps après que la seconde caméra commence à fonctionner.

6. Procédé selon l'une quelconque des revendications 1 à 5, dans lequel un procédé pour déterminer une valeur de zoom correspondant à l'image de prévisualisation pendant le processus de changement progressif du FOV de l'image de prévisualisation est le suivant :

$$\text{zoomValue} = 2^{\frac{S}{T}*t*n}\text{, dans lequel}$$

S est une distance entre une première option de rapport de zoom et la seconde option de rapport de zoom sur le dispositif d'affichage, et n est un nombre entier positif inférieur à la quantité N de secondes images de prévisualisation.

7. Dispositif électronique comprenant un dispositif d'affichage, une pluralité de caméras avec des distances focales différentes, une mémoire, un processeur couplé à la mémoire, une pluralité d'applications et un ou plusieurs programmes, dans lequel les centres optiques de la pluralité de caméras ne coïncident pas les uns avec les autres, la pluralité de caméras comprennent une première caméra et une seconde caméra, la première caméra et la seconde caméra sont deux caméras avec des distances focales adjacentes dans la pluralité de caméras,
et lorsque le processeur exécute le ou les programmes, le dispositif électronique effectue le procédé selon l'une quelconque des revendications 1 à 6.

8. Support de stockage informatique, dans lequel le support de stockage informatique stocke un programme informatique, le programme informatique comprend des instructions de programme, et lorsque les instructions de programme sont exécutées sur un dispositif électronique comprenant un dispositif d'affichage et une pluralité de caméras avec distances focales différentes, le dispositif électronique effectue le procédé selon l'une quelconque des revendications 1 à 6.

**Electronic device 100**

Antenna 1

Antenna 2

| Mobile communication module 2G/3G/4G/5G [150] | Wireless communication module BT/WLAN/GNSS/NFC/IR/FM [160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button 190

Internal memory [121]

SIM card interfaces 1 to N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 1

Electronic device 100

170A

193-1        193-2

193

194

AA

FIG. 2A

Electronic device 100

Rear cover

193-3
193-4 — 193
193-5

196

FIG. 2B

FIG. 3A

FIG. 3B

FIG. 4A

FIG. 4B

FIG. 4C

FIG. 4D

FIG. 4E

FIG. 4F

Image M

Image 3

FOV 2

O1

O3

O4

FIG. 4G

Image M

Image T

O4

FIG. 4H

FIG. 5A

FIG. 5B

FIG. 5C

FIG. 5D

FOV 1' (image M')

Image 1'

O1'

FIG. 5E

Image M'

Image 2'

O2' (O1')

FIG. 5F

FIG. 5G

FIG. 5H

FIG. 6A

FIG. 6B

307 ● 00:00:04

3.1X

FIG. 6C

307 ● 00:00:10

5X

FIG. 6D

FIG. 6E

FIG. 6F

FIG. 6G

FIG. 6H

S701: Detect an operation of tapping a display by a finger of a user

S702: Determine whether a location at which the finger of the user taps the display is on a target zoom point

Yes

S703: A camera application sends, to a hardware abstract layer, a zoom value corresponding to the target zoom point and a zoom value corresponding to a zoom sequence

S704: The hardware abstract layer starts to perform a first processing procedure

S705: Detect an operation of leaving the display by the finger of the user

S706: Determine whether a location at which the finger of the user leaves the display is on the target zoom point

No

S710: The camera application sends a zoom cancellation instruction to the hardware abstract layer

S711: The hardware abstract layer stops performing the first processing procedure and the second processing procedure

Yes

S707: The camera application sends a zoom confirmation instruction to the hardware abstract layer

S708: The hardware abstract layer starts to perform a second processing procedure

S709: The display displays a zoomed image

FIG. 7

S801: Adjust a cropping area of a current camera based on feature point coordinates of a target camera (for example, FOV center point coordinates of the target camera), and calculate feature point coordinates of the current camera (for example, FOV center point coordinates of the cropping area of the current camera)

S802: Determine whether the feature point coordinates of the target camera coincide with the feature point coordinates of the current camera

No

Yes

End

FIG. 8

Cameras being enabled

Cameras being disabled

Wide-angle camera

Common camera

Long-focus camera 1

Long-focus camera 2

0.4X

1X

5X

6X

FIG. 9A

Cameras being enabled

Camera being disabled

Wide-angle camera

Common camera

Long-focus camera 1

Long-focus camera 2

0.4X

1X

5X

6X

FIG. 9B

Camera being disabled | Cameras being enabled

Wide-angle camera
0.4X

Common camera
1X

Long-focus camera 1
5X

Long-focus camera 2
6X

**FIG. 9C**

Cameras being disabled | Cameras being enabled

Wide-angle camera
0.4X

Common camera
1X

Long-focus camera 1
5X

Long-focus camera 2
6X

**FIG. 9D**

**Common camera (MAIN)**

Optical
image

Analog
electrical signal

Raw digital
image RAW

Focal length

Scene | Lens | Glass | Image sensor | Digital-to-analog converter

**Long-focus camera (TELE)**

Optical
image

Analog
electrical
signal

Raw digital
image RAW

Focal length

**Image signal processor ISP**

Post-
processing
module

Cropped
image

Cropping
module

Cropping
parameter

Hardware
abstract
layer
(HAL)

I/O control
interface

YUV/RGB image

Zoom value
corresponding
to a zoom
ratio

**Processor**

Application
processor

Baseband
processor

Multimedia
accelerator

To-be-displayed image

**Display**

Camera
application

FIG. 10

FIG. 11

S1201: An electronic device 100 displays a first preview image at a first zoom ratio on a display, where the first preview image is captured by a first camera

S1202: The electronic device 100 detects a tap operation of a user for a second zoom ratio option

S1203: The electronic device 100 generates at least one second preview image based on at least one third zoom ratio, and displays the at least one second preview image on the display, where the at least one third zoom ratio is between the first zoom ratio and a second zoom ratio

S1204: The electronic device 100 displays a third preview image at the second zoom ratio on the display, where the third preview image is captured by a second camera

FIG. 12

## REFERENCES CITED IN THE DESCRIPTION

**Patent documents cited in the description**

- CN 202110612148
- US 2020137372 A1
- EP 3720112 A1
- US 2017230585 A1
- CN 111654631 A